# EUROPÄISCHE PATENTSCHRIFT

(11) **EP 3 507 606 B1**
(45) Veröffentlichungstag und Bekanntmachung des Hinweises auf die Patenterteilung: **28.12.2022**
(21) Anmeldenummer: 17754114.1
(22) Anmeldetag: 03.08.2017
(51) Int. Cl.: G01N 35/00, G01N 35/04

(54) **VERFAHREN ZUM AUFNEHMEN EINES PROBENGEFÄSSES AUS EINEM PROBENTRÄGER UND ZUR DURCHFÜHRUNG DES VERFAHRENS AUSGEBILDETE VORRICHTUNG**
METHOD FOR RECEIVING A SAMPLE VESSEL FROM A SAMPLE CARRIER, AND DEVICE DESIGNED TO CARRY OUT THE METHOD
PROCÉDÉ PERMETTANT DE RECEVOIR UN RÉCIPIENT POUR ÉCHANTILLON À PARTIR D'UN PORTE-ÉCHANTILLON ET DISPOSITIF CONÇU POUR LA MISE EN OEUVRE DU PROCÉDÉ

(30) Priorität: 02.09.2016 DE 102016116498
(43) Veröffentlichungstag der Anmeldung: 10.07.2019
(73) Patentinhaber: Hamilton Storage GmbH, 7208 Malans (CH)
(72) Erfinder: SEEBER, Johann, 7013 Donat/Ems (CH)
(74) Vertreter: Schmitt-Nilson Schraud Waibel Wohlfrom Patentanwälte Partnerschaft mbB
(86) Internationale Anmeldenummer: PCT/EP2017/069689
(87) Internationale Veröffentlichungsnummer: WO 2018/041516

(56) Entgegenhaltungen:
- EP-A1- 1 985 368
- WO-A1-2011/132037
- US-A- 4 244 458
- US-A1- 2009 158 863
- US-A1- 2011 158 777
- US-A1- 2012 060 514
- US-A1- 2015 274 423

## Beschreibung

### STAND DER TECHNIK

US 2012/0060514 zeigt einen Röhrchenaufnahmemechanismus der ausgebildet ist, in einem Speicher- und Abgabesystem für chemische und biologische Proben eingesetzt zu werden. Der Mechanismus verfügt über einen Greifmechanismus, der oberhalb eines Probenröhrchen in einem Probenträger angeordnet ist und über eine Stempel, der unterhalb des Probenröhrchens angeordnet ist. Zur Entnahme des Probenröhrchens aus dem Probenträger drückt der Stempel von unten das Probenröhrchen aus dem Probenträger hinaus zwischen den Greifmechanismus. Zur Abgabe des Probenröhrchens in den Probenträger drückt ein Stempel, der in dem Greifmechanismus angeordnet ist, das Probenröhrchen von oben in den Probenträger hinein.

US 2015/0274423 A1 zeigt eine Probengefäßhalteeinrichtung oberhalb eines Probenhalters. Zur Entnahme eines Probengefäßes aus dem Probenhalter schiebt ein Pin von unten das Probengefäß aus dem Probenhalter in die Probegefäßhalteeinrichtung. Um das Probengefäß wieder in dem Probenhalter abzusetzen, drückt ein zweiter Pin, der oberhalb der Probengefäßhalteeinrichtung angeordnet ist, das Probengefäß vertikal nach unten aus der Probengefäßhalteeinrichtung heraus in den Probenhalter.

US 2011/0158777 A1 und EP 1 985 368 A1 zeigen ebenfalls eine Probengefäßentnahme und -aufnahme wie in US 2015/02774423 A1.

US 2009/0158863 A1 zeigt, dass aus einem Probenhalter ein Probenbehälter in vertikaler Richtung nach oben durch einen Pin herausgeschoben wird und durch einen oberhalb des Probenhalters angeordneten Greifabschnitt entnommen wird. Zum Zurückstellen des Probenbehälters fährt der Greifabschnitt über den Probenhalter und schiebt den Probenbehälter von oberhalb in vertikaler Richtung nach unten in den Probenhalter hinein.

WO 2011/132037 A1 zeigt eine besondere Ausbildung eines Greifabschnitts.

### BESCHREIBUNG

Die vorliegende Erfindung betrifft ein Verfahren zum Aufnehmen eines Probengefäßes aus einem Probenträger mittels einer Greifvorrichtung mit einem ersten Greifabschnitt und einem zweiten Greifabschnitt. Der erste Greifabschnitt ist derart ausgebildet, dass er das Probengefäß von einer ersten Seite her ergreift. Der erste Greifabschnitt weist eine erste Halterung für das Probengefäß und ein erstes Werkzeug zum Bewegen des Probengefäßes entlang eines Hubwegs auf. Der zweite Greifabschnitt ist derart ausgebildet, dass er das Probengefäß von einer der ersten Seite gegenüber liegenden zweiten Seite her ergreift. Der zweite Greifabschnitt weist eine zweite Halterung für das Probengefäß auf.

Das vorgeschlagene Verfahren umfasst folgende Schritte:
- Positionieren des ersten Greifabschnitts auf der ersten Seite des Probengefäßes und des zweiten Greifabschnitts auf der zweiten Seite des Probengefäßes derart, dass der erste Greifabschnitt dem zweiten Greifabschnitt entlang des Hubwegs gegenüber liegt,
- In Eingriff Bringen des ersten Werkzeugs mit dem Probengefäß,
- Bewegen des Probengefäßes entlang des Hubwegs in Richtung von der ersten Seite zu der zweiten Seite,
- Aufnehmen des Probengefäßes in der zweiten Halterung,
- Neu Positionieren des ersten Greifabschnitts und des zweiten Greifabschnitts in einer orthogonal zum Hubweg verlaufenden lateralen Richtung derart, dass der erste Greifabschnitt auf der ersten Seite des Probengefäßes dem zweiten Greifabschnitt entlang des Hubwegs gegenüber liegt, wobei das Probengefäß in einem nicht von dem Probenträger eingenommenen freien Bereich angeordnet ist,
- Bewegen des Probengefäßes entlang des Hubwegs in entgegengesetzter Richtung von der zweiten Seite zu der ersten Seite,
- In Eingriff Bringen des Probengefäßes mit der im ersten Greifabschnitt vorgesehenen Halterung.

Die Erfindung betrifft außerdem eine zur Durchführung dieses Verfahrens ausgebildete Vorrichtung, insbesondere eine entsprechend ausgebildete Greifvorrichtung sowie eine Probenmanipulationseinrichtung mit einer solchen Greifvorrichtung.

Probenmanipulationseinrichtungen dieser Art werden in der Regel zum Ablegen bzw. zum Entnehmen von Proben mit biologischem, mikrobiologischem und/oder chemischem Material aus Probenspeichereinrichtungen in der chemischen, biochemischen, pharmazeutischen oder biologischen Industrie und Forschung eingesetzt. Die Proben enthalten bestimmte Reagenzien, die chemischer, biochemischer oder biologischer Art sein können, und werden unter vorgegebenen Umgebungsbedingungen, oft auch bei Gefriertemperaturen bis zu - 20 °C, manchmal sogar zwischen - 50 °C und - 90 °C, und manchmal sogar darunter, gelagert. Bei diesen Anlagen dieser Art ist ein großer Durchsatz erwünscht, d.h. es sollen kontinuierlich eine möglichst große Anzahl von Probengefäßen pro Zeiteinheit aus dem Speicherbereich entnommen werden können bzw. in dem Speicherbereich abgelegt werden können. Hierzu dient die angesprochene Probenmanipulationseinrichtung mit einer Transporteinheit zum Transport von Probenträgern zwischen einem Speicherbereich für Probenträger und einer Probengefäß-Entnahmestation. Die Probenmanipulationseinrichtung umfasst darüber hinaus wenigstens eine Greifvorrichtung der eingangs angesprochenen Art, mittels derer bei einem Probenentnahmevorgang in der Probengefäß-Entnahmestation einzelne Probengefäße aus dem Probenträger entnehmbar sind und beispielsweise in einem anderen Probenträger wieder abgelegt werden können. Die Probenmanipulationseinrichtung dient auch umgekehrt zum Einlagern von Probengefäßen in die Probenspeichereinrichtung. Hierzu werden die entsprechenden einzulagernden Probengefäße mittels der Greifvorrichtung aus einem ersten Probeträger entnommen und in einem weiteren Probenträger abgelegt, der anschließend mittels der Transporteinheit in den Speicherbereich gebracht wird.

Fehlgriffe der Greifvorrichtung beim Entnehmen von Probengefäßen aus Probenträgern bzw. beim Ablegen von Probengefäßen in einen Probenträger führen unweigerlich zu Einbußen beim erreichbaren Durchsatz an entnehmbaren bzw. einzulagernden Probengefäßen. Die Quote an Fehlgriffen steigt naturgemäß mit zunehmender Arbeitsgeschwindigkeit der Greifeinrichtung an.

Im täglichen Betrieb müssen oft Probengefäße und Probenträger unterschiedlichster Art behandelt werden, in vielen Fällen zeitgleich oder unmittelbar nacheinander.

Manche Probenträger weisen Probenträgeraufnahmen auf, die über eine Sicherung aufgenommener Probengefäße gegen Entnahme verfügen. Sobald im Zuge einer Abgabemanipulation ein Probengefäß in einer solchen Probenträgeraufnahme aufgenommen ist, ist es nicht mehr möglich, das Probengefäß durch Bewegung in einer zu der Abgaberichtung bzw. Aufnahmerichtung entgegengesetzte Richtung wieder aus der Probenträgeraufnahme zu entnehmen. Beispielsweise sind die Probenträgeraufnahmen solcher Probenträger oft mit Rasteinrichtungen ausgestattet, die mit entsprechenden Rastvorrichtungen an einem Probengefäß in Eingriff gelangen, wenn das Probengefäß unter Bewegung in der Abgaberichtung in die Probenträgeraufnahme abgegeben wird. Dieser Eingriff verhindert die Entnahme des Probengefäßes in einer Richtung umgekehrt zur Abgaberichtung, nicht aber eine weitere Bewegung des Probengefäßes in der Abgaberichtung. Das Probengefäß kann deshalb durch Weiterbewegung in der Abgaberichtung aus der Probenträgeraufnahme entnommen werden, wobei ggf. ein Boden der Probenträgeraufnahme durchstoßen werden muss. Zur Manipulation von Probengefäßen zwischen derartigen Probenträgern ist in der Regel vorgesehen, dass ein Entnahmeprobenträger und ein Zielprobenträger übereinander liegend positioniert werden, so dass sich eine jeweilige Probenträgeraufnahme des Entnahmeprobenträgers, in der sich ein zu entnehmendes Probengefäß befindet, genau oberhalb einer gewünschten Probenträgeraufnahme des Zielprobenträgers, in die das Probengefäß abgegeben werden soll, befindet. Dann kann das Probengefäß in der derselben Richtung wie die Abgaberichtung, normalerweise bei Anordnung des Entnahmeprobenträgers oberhalb des Zielprobenträgers von oben nach unten, bewegt werden, dabei ggf. den Boden des Entnahmeprobenträgers durchstoßen und in den Zielprobenträger abgegeben werden.

Normalerweise verlangt die Behandlung von Probengefäßen, die in solchen Probenträgern aufgenommen sind, speziell auf die beschriebenen Manipulationsvorgänge abgestimmte Probenmanipulationsvorrichtungen, insbesondere speziell abgestimmte Greifwerkzeuge und/oder Greifvorrichtungen.

Die Erfindung löst die Aufgabe, eine verbesserte Greifvorrichtung zu schaffen, mit der es gelingt, bei einer Probenmanipulationsvorrichtung der oben beschriebenen Art Probengefäße zuverlässig und schnell in Probenträgeraufnahmen abzugeben und aus diesen zu entnehmen.

Hierzu wird gemäß einem ersten Aspekt ein Verfahren mit den eingangs beschriebenen Merkmalen vorgeschlagen.

Die erfindungsgemäße Lösung erlaubt es, Probengefäße zuverlässig und schnell in Probenträgeraufnahmen abzugeben und aus diesen zu entnehmen, und zwar auch dann wenn die Probengefäße in Probenträgern der oben beschriebenen Art aufgenommen sind, d.h. wenn die in den Probenträgeraufnahmen aufgenommenen Probengefäße in der oben beschriebenen Art gegenüber Bewegung aus der Probenträgeraufnahme heraus gesichert sind. Insbesondere gelingt es, den Probengefäßdurchsatz beim Entnehmen von Probengefäßen aus einem Probenträger und/oder beim und/oder Abgeben von Probengefäßen in einen Probenträger gegenüber bekannten Lösungen zu steigern, ohne dass merkliche Einbußen bei der Zuverlässigkeit in Kauf genommen werden müssen. Es ist dabei nicht erforderlich, eine besonders ausgebildete Probenmanipulationseinrichtung zu verwenden. Insbesondere kann eine Greifvorrichtung verwendet werden, wie sie auch zur Manipulation von Probengefäßen eingesetzt wird, die ohne Sicherung gegenüber Entnahme durch Bewegung der Probengefäße in einer Richtung umgekehrt zur Abgaberichtung in Probenträgeraufnahmen aufgenommen sind. Damit lassen sich Probengefäße und Probenträger mit Sicherung gegenüber Entnahme von Probengefäßen parallel neben Probengefäßen und Probenträgern anderer Bauart manipulieren, ohne dass jeweils speziell ausgebildete Greifvorrichtungen verwendet werden müssen. Ein Wechsel von Greifvorrichtungen ist ebenso wenig erforderlich wie das Vorhalten speziell ausgebildeter Greifwerkzeuge und/oder Greifvorrichtungen.

Insbesondere weist der erste Greifabschnitt das erste Werkzeug auf, welches mit dem Probengefäß von der ersten Seite her in Eingriff gebracht wird, um das Probengefäß entlang des Hubwegs in Richtung von der ersten Seite zu der zweiten Seite - d.h. in Abgaberichtung - zu bewegen. Diese Bewegung in Abgaberichtung dient dazu, das Probengefäß in Eingriff mit einer zweiten Halterung zu bringen, die im zweiten Greifabschnitt vorgesehen ist. Sobald das Probengefäß in der im zweiten Greifabschnitt vorgesehenen zweiten Halterung aufgenommen ist, kann die weitere Manipulation des Probengefäßes durch Bewegen der im zweiten Greifabschnitt vorgesehenen zweiten Halterung erfolgen. Der erste Greifabschnitt muss hierzu - zumindest zunächst - nicht weiter mitwirken. Vielmehr kann diese Bewegung unabhängig vom ersten Greifabschnitt erfolgen.

Der zweite Greifabschnitt kann ein zweites Werkzeug aufweisen, welches zum Bewegen des Probengefäßes entlang des Hubwegs in der Richtung von der zweiten Seite zu der ersten Seite - entgegengesetzt zu der Abgaberichtung - mit dem Probengefäß in Eingriff bringbar ist. Das zweite Werkzeug erleichtert insbesondere das Aufnehmen von Probengefäßen aus Probengefäßaufnahmen, die nicht über eine Entnahmesicherung verfügen, so dass Probengefäße aus solchen Probengefäßaufnahmen durch Bewegung entgegen der Abgaberichtung entnommen werden können. Darüber hinaus kann das zweite Werkzeug auch die Abgabe von Probengefäßen in Zielprobenträger unterstützen.

Erfindungsgemäß muss die erste Seite eine Oberseite des Probengefäßes sein und die zweite Seite kann eine Unterseite des Probengefäßes sein. Der erste Greifabschnitt - insbesondere das erste Werkzeug und die erste Halterung - greift dann von oben an dem Probengefäß an, während der zweite Greifabschnitt - insbesondere die zweite Halterung und ggf. das zweite Werkzeug - von unten her an an dem Probengefäß angreift. Die erfindungsgemäß vorgesehene Bewegung des Probengefäßes entlang des Hubwegs in Richtung von der ersten Seite zu der zweiten Seite - d.h. in Abgaberichtung - nach erfolgten Eingriff mit dem ersten Werkzeug ist dann eine Bewegung von oben nach unten, bis das Probengefäß im Eingriff mit der im zweiten Greifabschnitt vorgesehenen zweiten Halterung gelangt, die sich unterhalb des ersten Greifabschnitts und unterhalb des Probenträgers befindet. Das Probengefäß wird also im ersten Schritt bei einer Entnahmemanipulation von oben nach unten bewegt, wobei ggf. ein Boden des Entnahmeprobenträgers durchstoßen wird. Wenn das Probengefäß in der im zweiten Greifabschnitt vorgesehenen zweiten Halterung aufgenommen ist, befindet sich das Probengefäß günstigerweise vollständig unterhalb des Entnahmeprobenträgers und kann somit in einfacher Weise durch entsprechende Bewegung des zweiten Greifabschnitts, insbesondere der zweiten Halterung, in lateraler Richtung bewegt werden, ohne mit dem Entnahmeprobenträger zu kollidieren. Hierzu muss lediglich der zweite Greifabschnitt in lateraler Richtung bewegt werden. Eine weitere Bewegung des ersten Greifabschnitts und sogar des zweiten Werkzeugs ist hierzu nicht unbedingt erforderlich.

Das vorgeschlagene Verfahren kann ferner die folgenden Schritte zum Abgeben des Probengefäßes in eine Zielprobengefäßaufnahme umfassen:
- Erneutes Neu Positionieren des ersten Greifabschnitts derart, dass das Probengefäß bezüglich des Hubwegs der Zielprobengefäßaufnahme zugeordnet ist,
- Außer Eingriff Bringen des Probengefäßes von der im ersten Greifabschnitt vorgesehenen ersten Halterung und Bewegen des Probengefäßes entlang des Hubwegs von der ersten Seite zu der zweiten Seite,
- Ablegen des Probengefäßes in der Zielprobengefäßaufnahme.

Hierbei kann das Außer Eingriff Bringen des Probengefäßes von der im ersten Greifabschnitt vorgesehenen ersten Halterung mit Hilfe des im ersten Greifabschnitt vorgesehenen ersten Werkzeugs erfolgen.

Insbesondere kann der erste Greifabschnitt eine von der ersten Halterung unabhängige Zentriereinrichtung für das Probengefäß aufweisen, welche wenigstens ein Federelement umfasst, wobei im Zuge des In Eingriff-Bringens des Probengefäßes mit der im ersten Greifabschnitt vorgesehenen ersten Halterung und/oder im Zuge des Außer Eingriff Bringens des Probengefäßes von der im ersten Greifabschnitt vorgesehenen ersten Halterung ein Zentrieren des Probengefäßes bezüglich des Hubwegs durch Spanneingriff mit der Zentriereinrichtung erfolgt. Ein Spanneingriff des Probengefäßes mit der Zentriereinrichtung und Zentrieren des Probengefäßes bezüglich des Hubwegs bei einer Aufnahmemanipulation kann dabei jedenfalls vor dem in Eingriff Bringen und/oder bei einer Abgabemanipulation jedenfalls bei oder nach Freigabe des Eingriffs des Probengefäßes mit der im ersten Greifabschnitt vorgesehenen ersten Halterung vorgesehen sein. Das Federelement kann so ausgebildet sein, dass das Probengefäß im Zuge seiner Bewegung in einer Eingriffsrichtung vom Probenträger zu der ersten Halterung in Spanneingriff mit der Zentriereinrichtung gelangt, bevor es mit der ersten Halterung in Eingriff gelangt, und/oder dass das Probengefäß im Zuge seiner Bewegung entgegen der Eingriffsrichtung von der ersten Halterung zum Probenträger bei Freigabe des Eingriffs zwischen Probengefäß und erster Halterung in Spanneingriff mit der Zentriereinrichtung ist. Die Zentriereinrichtung kann beispielsweise eine Mehrzahl von Federelementen, insbesondere drei Federelemete, aufweisen. Der zweite Greifabschnitt kann insbesondere dazu ausgebildet sein, zumindest bei Manipulation von Probengefäßen die ungesichert gegenüber Entnahme in Probengefäßaufnahmen aufgenommen sind, das Probengefäß im Zuge einer Aufnahmemanipulation entlang eines Hubwegs in Eingriffsrichtung von dem Probenträger zu der ersten Halterung zu bewegen, um das Probengefäß mit der im ersten Greifabschnitt vorgesehenen ersten Halterung in Eingriff zu bringen. Dies kann beispielsweise mit Hilfe des zweiten Werkzeugs geschehen. Bei einer Aufnahmemanipulation nimmt die Greifvorrichtung ein Probengefäß aus einem Probenträger auf. Dies kann insbesondere derart geschehen, dass der zweite Greifabschnitt, insbesondere das zweite Werkzeug, das Probengefäß von unten her ergreift und dann entlang des Hubwegs nach oben verfährt, bis das Probengefäß mit der im ersten Greifabschnitt vorgesehenen ersten Halterung in Halteeingriff gelangt. Sobald der Halteeingriff erfolgt ist, kann der zweite Greifabschnitt, insbesondere das zweite Werkzeug, wieder zurück bewegt werden und die weitere Manipulation des Probengefäßes mittels des ersten Greifabschnitts erfolgen. Der zweite Greifabschnitt kann beispielsweise als zweites Werkzeug einen von der zweiten Seite her mit dem Probengefäß in Anlage bringbaren Stift oder Stempel aufweisen, der entlang der Hubrichtung bewegbar ist. Zum Anheben eines in einem Probenträger aufgenommenen Probengefäßes drückt dann der Stift oder Stempel von der zweiten Seite her auf des Probengefäß, um dieses entgegen der Abgaberichtung zu bewegen, beispielsweise anzuheben. Im Zuge dieser Hubbewegung schiebt der Stift oder Stempel schließlich das Probengefäß in Eingriffsrichtung in die erste Halterung im ersten Greifabschnitt.

Wenn ein Probengefäß aus einer Probengefäßaufnahme, die über eine Sicherung gegenüber Entnahme des Probengefäßes durch Bewegung entgegen der Abgaberichtung verfügt, entnommen werden soll, ist ein Bewegen des Probengefäßes mit Hilfe des zweiten Greifabschnitts, insbesondere des zweiten Werkzeugs, jedenfalls nicht unmittelbar möglich. In solchen Fällen wird erfindungsgemäß vorgeschlagen, hilfsweise in einem ersten Schritt den ersten Greifabschnitt, insbesondere das erste Werkzeug, heranzuziehen, um das Probengefäß in Abgaberichtung aus der Probengefäßaufnahme heraus zu bewegen, ggf. unter Durchstoßen eines Bodens der Probengefäßaufnahme. Dabei bringt das erste Werkzeug das Probengefäß dann in Eingriff mit einer im zweiten Greifabschnitt vorgesehenen Halterung, so dass eine weitere Manipulation des Probengefäßes durch Verfahren des zweiten Greifabschnitts erfolgen kann.

Zusätzlich oder alternativ kann die Greifvorrichtung auch zum Abgeben eines Probengefäßes in einen Probenträger ausgebildet sein. Bei einer Abgabemanipulation legt die Greifvorrichtung ein in der ersten Halterung des ersten Greifabschnitts gehaltenes Probengefäß in einen Probenträger ab. Hierzu kann der erste Greifabschnitt dazu ausgebildet sein, einen Eingriff mit einem Probengefäß freizugeben, so dass das Probengefäß aus der ersten Halterung bewegt werden kann. Dies kann insbesondere derart geschehen, dass das Probengefäß nach außer Eingriff Bringen mit der ersten Halterung sich durch sein eigenes Gewicht entlang des Hubwegs - bezogen auf die erste Halterung - entgegen der Eingriffsrichtung und - bezogen auf die Zielprobenträgeraufnahme - in Abgaberichtung bewegt und in einer vorgesehenen Aufnahme im Probenträger aufgefangen wird. Als zusätzliche Unterstützung oder alternativ zur Bewegung infolge von Schwerkraft kann auch vorgesehen sein, dass der zweite Greifabschnitt, insbesondere das im zweiten Greifabschnitt vorgesehene zweite Werkzeug, das Probengefäß von unten her ergreift und dann entlang des Hubwegs in Abgaberichtung verfährt, bis das Probengefäß in einer vorgesehenen Aufnahme des Probenträgers aufgenommen ist. Der zweite Greifabschnitt kann dabei insbesondere eine gewisse Führung der Bewegung des Probengefäßes entlang des Hubwegs bewirken. Hierzu kann der zweite Greifabschnitt, insbesondere das zweite Werkzeug, bereits nach oben bewegt werden, bevor sich das Probengefäß aus dem Haltegriff im ersten Greifabschnitt löst, um eine möglichst sanfte Bewegung des Probengefäßes zu gewährleisten.

Das im ersten Greifabschnitt vorgesehene erste Werkzeug kann insbesondere das Lösen eines Eingriffs des Probengefäßes mit der ersten Halterung im Zuge einer Abgabemanipulation erleichtern. Hierzu kann das erste Werkzeug derart ausgebildet sein, dass es das Probengefäß von der ersten Seite her ergreift, wobei das erste Werkzeug dazu ausgebildet ist, das Probengefäß außer Eingriff mit der im ersten Greifabschnitt vorgesehenen ersten Halterung zu bringen. Insbesondere kann das erste Werkzeug dazu ausgebildet sein, das Probengefäß im Zuge einer Abgabemanipulation entlang des Hubwegs entgegen der Eingriffsrichtung von der ersten Halterung zu dem Probenträger zu bewegen, um das Probengefäß außer Eingriff mit der im ersten Greifabschnitt vorgesehenen ersten Halterung zu bringen. Das erste Werkeug kann beispielsweise als ein von der ersten Seite her mit dem Probengefäß in Anlage bringbarer Stift oder Stempel ausgebildet sein, der entlang der Hubrichtung bewegbar ist. Zum Lösen des Eingriffs eines in der ersten Halterung gehaltenen Probengefäßes drückt dann der Stempel von der ersten Seite her auf des Probengefäß und schiebt dieses entlang des Hubwegs entgegen der Eingriffsrichtung aus der ersten Halterung. Das erste Werkzeug kann außerdem dazu dienen, das Probengefäß im Zuge einer Abgabemanipulation entlang des Hubwegs entgegen der Eingriffsrichtung von der ersten Halterung weg zu bewegen, beispielsweise im Sinne einer gewissen Führung des Probengefäßes, bis dieses die gewünschten Aufnahme im Probenträger erreicht.

Im Zuge einer solchen Aufnahmemanipulation oder Abgabemanipulation bewegt sich der zweite Greifabschnitt, insbesondere das im zweiten Greifabschnitt vorgesehene zweite Werkzeug, also im Wesentlichen entlang der Hubrichtung vor und/oder zurück. Der erste Greifabschnitt, insbesondere die das im ersten Greifabschnitt vorgesehene erste Halterung, bewegt sich dagegen im Wesentlichen in einer Ebene orthogonal zur Hubrichtung. In ähnlicher Weise bewegt sich das im ersten Greifabschnitt vorgesehene erste Werkzeug im Wesentlichen entlang der Hubrichtung vor und zurück. Die im zweiten Greifabschnitt vorgesehene zweite Halterung bewegt sich dagegen im Wesentlichen ebenfalls in einer Ebene orthogonal zur Hubrichtung. Eine zusätzliche Bewegung der im ersten Greifabschnitt vorgesehenen ersten Halterung und/oder der im zweiten Greifabschnitt vorgesehenen zweiten Halterung entlang der Hubrichtung ist nicht unbedingt erforderlich und normalerweise auch gar nicht vorgesehen. Dies spart enorm Zeit bei der Manipulation einer großen Vielzahl von Flüssigkeitsproben.

Wenn die Probenmanipulationseinrichtung in einem Probenträger-Speichersystem eingesetzt wird, ist die Durchsatzrate der Probenmanipulationseinrichtung ein entscheidender Faktor. Diese wird zu einem erheblichen Teil durch die maximale Arbeitsgeschwindigkeit der Greifvorrichtung bestimmt. Insbesondere gelingt es mit der erfindungsgemäßen Greifvorrichtung, die Erfolgsquote beim in Eingriff Bringen des Probengefäßes mit der im ersten Greifabschnitt vorgesehenen ersten Halterung und/oder beim außer Eingriff Bringen des Probengefäßes von der im ersten Greifabschnitt vorgesehenen ersten Halterung und Abgabe in einen Probenträger zu verbessern, und zwar auch dann wenn Probengefäße und/oder Probengefäßaufnahmen verschiedener Konfiguration (z.B. mit Sicherung und ohne Sicherung) in demselben Probenspeichersystem nebeneinander oder unmittelbar aufeinander folgend eingesetzt werden. Dadurch kann der Probendurchsatz gesteigert werden: Denn die geringere Fehlerquote führt unmittelbar zu einem höheren Durchsatz. Darüber hinaus erlaubt es die geringere Fehlerquote auch, die Arbeitsgeschwindigkeit der Greifvorrichtung zu erhöhen. Aufwändige Wechsel der Greifvorrichtung und/oder des Greifwerkzeugs sind auch dann nicht erforderlich, wenn Probengefäße und/oder Probenträger mit unterschiedlicher Konfiguration eingesetzt werden. Das wirkt sich dann auf den maximal erreichbaren Durchsatz aus.

Die oben beschriebene Zentriereinrichtung ist unabhängig von der im ersten Greifabschnitt der Greifvorrichtung vorgesehenen ersten Halterung und sie verfügt zudem über wenigstens ein Federelement. Die Zentriereinrichtung ist insbesondere funktional unabhängig von der ersten Halterung, so dass die durch die Zentriereinrichtung auf das Probengefäß ausgeübte Zentrierwirkung unabhängig von dem durch die erste Halterung ausgeübten Halteeingriff ist. Das hat mehrere Vorteile. Insbesondere erlaubt die Zentriereinrichtung bei einer Aufnahme eines Probengefäßes aus einem Probenträger eine gewisse Fehlausrichtung des ersten Greifabschnitts relativ zu dem Probengefäß, weil ihre zentrierende Wirkung derartige Fehlausrichtungen korrigiert. Da die Zentriereinrichtung unabhängig von der ersten Halterung ist, kann sie so angeordnet sein, dass ihre zentrierende Wirkung auf das Probengefäß bereits einsetzt, bevor das Probengefäß die erste Halterung erreicht. Zudem bewirkt das wenigstens eine Federelement eine Beschränkung der auf das Probengefäß einwirkenden zentrierenden Kräfte. Dies zusammen führt dazu, dass sehr viel größere Fehlausrichtungen zwischen dem aus dem Probenträger entnommenen Probengefäß und der Greifvorrichtung toleriert werden können, ohne dass es bei der Entnahme eines Probengefäßes aus einem Probenträger und in Eingriff Bringen des Probengefäßes mit der ersten Halterung zu einem Verklemmen oder gar Herabfallen des Probengefäßes kommt. Entsprechendes gilt bei einer Abgabe eines Probengefäßes aus der ersten Halterung in einen Probenträger: Im Zuge seiner Bewegung aus der Eingriffstellung in der ersten Halterung heraus erfährt das Probengefäß nach Verlassen der Eingriffstellung eine zentrierende Wirkung beim Passieren der Zentriereinrichtung. Diese zentrierende Wirkung ist sanft, aber dennoch genau. Damit kommt es bei der Abgabe des Probengefäßes aus der ersten Halterung in einen Probenträger kaum noch zu einem Verklemmen oder gar Abfallen des Probengefäßes. Ein wesentlicher Vorteil dieser größeren Toleranz gegenüber Fehlausrichtungen liegt darin, dass die Greifvorrichtung, insbesondere die im ersten Greifabschnitt vorgesehene erste Halterung, während einer Aufnahmemanipulation und/oder einer Abgabemanipulation in einem größeren Abstand zur Oberseite des Probengefäßes bzw. zum Probenträger verharren kann, weil ja die Zentriereinrichtung im Zuge einer Aufnahmemanipulation und/oder Abgabemanipulation für eine genaue Ausrichtung sorgt. Man braucht auf diese Weise sehr viel weniger Bewegung der Greifvorrichtung relativ zum Probenträger, insbesondere benötigt man nicht unbedingt, falls doch nur sehr wenig, Bewegung des ersten Greifabschnitts, jedenfalls der ersten Halterung, in Hubrichtung bzw. entgegen der Hubrichtung. Im vielen Fällen kann man auf solche Bewegungen des ersten Greifabschnitts, jedenfalls der ersten Halterung, sogar ganz verzichten. Dadurch kann bei jeder Aufnahmemanipulation und/oder Abgabemanipulation enorm viel Zeit eingespart werden, weil die Greifvorrichtung - ggf. bis auf das erste und zweite Werkzeug - jedenfalls in oder entgegen der Hubrichtung nicht bewegt werden muss, sondern relativ zu dem Probenträger in einer festen Höhe verharrt

Insbesondere kann die Zentriereinrichtung sogar in zweierlei Hinsicht unabhängig von der im ersten Greifabschnitt vorgesehenen ersten Halterung sein. Neben der bereits angesprochenen funktionalen Unabhängigkeit kann die Zentriereinrichtung zudem auch körperlich unabhängig von der ersten Halterung als ein eigenes Bauteil ausgestaltet sein. Die Zentriereinrichtung kann als eigenes Bauteil an der ersten Halterung angebracht sein, insbesondere mittels einer lösbaren Befestigung, beispielsweise durch Schrauben oder mittels eines Bajonettverschlusses. Damit kann die Zentriereinrichtung unabhängig von der ersten Halterung gefertigt werden oder ausgetauscht werden.

Die Zentriereinichtung umfasst wenigstens ein Federelement, insbesondere eine oder mehrere Federn. Das wenigstens eine Federelement ist dabei so angeordnet, dass das Probengefäß um Zuge seiner Bewegung in oder entgegen der Hubrichtung das Federelement passiert und beim Passieren des Federelements mit diesem in Eingriff gelangt. Dabei beaufschlagt das wenigstens eine Federelement das Probengefäß in einer solchen Weise, dass sich eine resultierende Kraft ergibt, die das Probengefäß immer zu einer Zentrierstellung bezüglich der ersten Halterung im ersten Greifabschnitt treibt. Die Zentrierstellung bezeichnet dabei eine Position entlang einer von einem Zentrum der ersten Halterung ausgehenden und in einem Zentrum der zugeordneten Aufnahme im Probenträger endenden gedachten Linie.

In bestimmten Ausführungsformen kann das Federelement so ausgebildet sein, dass das Probengefäß im Zuge seiner Bewegung in Eingriffsrichtung vom Probenträger zu der ersten Halterung in Spanneingriff mit der Zentriereinrichtung gelangt, bevor es mit der ersten Halterung in Eingriff gelangt, und/oder dass das Probengefäß im Zuge seiner Bewegung entgegen der Eingriffsrichtung von der ersten Halterung zum Probenträger bei oder nach Freigabe des Eingriffs zwischen Probengefäß und Halterung in Spanneingriff mit der Zentriereinrichtung ist. Die Zentriereinrichtung ist somit bei einer Aufnahmemanipulation der ersten Halterung vorgelagert, so dass eine fehlerhafte oder jedenfalls ungünstige Stellung des Probengefäßes - das bei gewisser Fehlausrichtung des Probenträgers zum zweiten Greifabschnitt sich möglicherweise mit etwas Versatz oder Verkippung bezüglich des idealen Hubwegs bewegt - beim Passieren der Zentriereinrichtung bereits bezüglich der ersten Halterung korrigiert wird, bevor ein Halteeingriff mit der ersten Halterung erfolgt. Umgekehrt ist die Zentriereinrichtung bei einer Abgabemanipulation der ersten Halterung derart nachgelagert, dass eine zusätzliche Zentrierung des Probengefäßes erfolgt, nachdem der Eingriff des Probengefäßes mit der ersten Halterung gelöst ist. Auf diese Weise lassen sich ungünstige Stellungen des Probengefäßes, insbesondere Verkippungen, korrigieren, die beim Lösen des Eingriffs zwischen Probengefäß und erster Halterung ansonsten leicht entstehen können.

Die Zentriereinrichtung kann eine Mehrzahl von Federelementen aufweisen, beispielsweise drei Federelemente, oder auch mehr Federelemente, falls gewünscht. Falls mehrere Federelemente vorgesehen sind, können diese den Hubweg umgebend angeordnet sein. Beispielsweise kann das Federelement in einer Ebene orthogonal zu dem Hubweg um den Hubweg herum angeordnet sein oder die Federelemente können in einer Ebene orthogonal zu dem Hubweg um den Hubweg herum angeordnet sein. Das Federelement oder die Federelemente können derart um den Hubweg herum angeordnet sein, dass eine bei Eingriff des Probengefäßes mit dem Federelement oder den Federelementen erzeugte Spannung des Federelements oder der Federelemente eine das Probengefäß auf den Hubweg zentrierende Rückstellkraft erzeugt, insbesondere derart, dass bei Spanneingriff mit dem Probenträger die Federelemente jeweils derart beaufschlagt sind, dass sich insgesamt eine auf den Schnittpunkt des Hubwegs mit der Ebene durch die Federelemente zu gerichtete Rückstellkraft ergibt. Für die Zentrierwirkung kann es zudem günstig sein, wenn das Federelement symmetrisch zu dem Hubweg angeordnet ist oder die Federelemente symmetrisch zu dem Hubweg angeordnet sind. Dann können insbesondere identische Federelemente verwendet werden, die in symmetrischer Weise um den Hubweg herum angeordnet sind. Es ist denkbar, das Federelement unter Vorspannung in der Zentriereinrichtung vorzusehen. Je nach Art des Federelements kann die Vorspannung hilfreich sein, um eine vorbestimmte Ruhelage der Zentriereinrichtung zu definieren und/oder ausreichend starke Rückstellkräfte beim Spanneingriff mit dem Probengefäß sicherzustellen.

In bestimmten Ausführungsformen kann das Federelement eine Schraubenfeder, insbesondere eine Schraubenzugfeder, umfassen. Die Schraubenfeder kann insbesondere in einer orthogonal zum Hubweg verlaufenden Ebene angeordnet sein. Im Falle mehrerer Federelemente können beispielsweise die Federelemente in einem vorbestimmten Winkel zueinander angeordnet sein, so dass sie den Hubweg umgeben. Im Falle dreier Federelemente können die Schraubenfedern beispielsweise in der Ebene in einem Winkel von 60 Grad zueinander angeordnet sein, so dass diese ein gleichseitiges Dreieck um den Schnittpunkt des Hubwegs mit der Ebene herum bilden. Ein in das Dreieck einbeschriebener Kreis hat dann vorzugsweise einen kleineren Durchmesser als der größte Durchmesser des Probengefäßes, so dass das Probengefäß beim Durchtritt durch das von den Schraubenfedern aufgespannte Dreieck die Schraubenfedern nach außen beaufschlagt. Die Schraubenfedern reagieren auf diese Beaufschlagung mit einer auf den Schnittpunkt zu gerichteten Rückstellkraft auf das Probengefäß, die umso größer ist je stärker die Beaufschlagung der jeweiligen Schraubenfeder ist. Bei einer Mehrzahl von symmetrisch um den Schnittpunkt herum angeordneten gleichartigen Federn ergibt sich so eine zentrierende Wirkung, weil die durch alle Schraubenfedern erzeugte Rückstellkraft genau dann gleich groß ist, wenn alle Schraubenfedern in gleicher Weise beaufschlagt sind.

Alternativ zu einer Schraubenfeder, oder falls gewünscht neben einer Schraubenfeder, kann das Federelement beispielsweise auch ein um den Hubweg herum angeordnetes gekrümmtes Federblechteil oder um den Hubweg herum angeordnetes gekrümmtes Federkunststoffteil umfassen. Die Krümmung eines solchen Federblechteils oder Federkunststoffteils ist dann bezüglich eines durch die Enden des Federblechteils oder Federkunststoffteils gehenden Zylinders konkav. Zusätzlich oder alternativ kann das Federelement auch ein in seiner Längsrichtung elastisch dehnbares Federelement umfassen, welches um den Schnittpunkt des Hubwegs mit der Ebene angeordnet ist, beispielsweise eine elastische Schnur, einen elastischen Faden, ein elastisches Seil oder ein elastisches Band. Vorzugsweise ist das elastisch dehnbare Federelement in der Form eines Vielecks, insbesondere eines symmetrischen Vielecks, um den Schnittpunkt herum gespannt.

Das im ersten Greifabschnitt vorgesehene erste Werkzeug kann so ausgebildet sein, dass es mit dem Probengefäß zum Antrieb desselben in Richtung von der ersten Seite zu der zweiten Seite, nicht jedoch zum Antrieb in Richtung von der zweiten Seite zu der ersten Seite koppelbar ist. Beispielsweise kann das im ersten Greifabschnitt vorgesehene erste Werkzeug bei Bewegung in Richtung von der ersten Seite zu der zweiten Seite mit dem Probengefäß koppelbar sein, und bei Bewegung in Richtung von der zweiten Seite zu der ersten Seite von dem Probengefäß entkoppelbar sein. In bestimmten Ausführungsformen kann das im ersten Greifabschnitt vorgesehene erste Werkzeug einen Stift aufweisen, der mit der ersten Seite des Probengefäßes zusammenwirkt, um das Probengefäß in Richtung von der ersten Seite zu der zweiten Seite zu bewegen.

Auch das im zweiten Greifabschnitt vorgesehene zweite Werkzeug kann so ausgebildet sein, dass es mit dem Probengefäß zum Antrieb desselben in Richtung von der zweiten Seite zu der ersten Seite, nicht jedoch zum Antrieb desselben in Richtung von der ersten Seite zur zweiten Seite koppelbar ist. Beispielsweise kann das im zweiten Greifabschnitt vorgesehene zweite Werkzeug bei Bewegung in Richtung von der zweiten Seite zu der ersten Seite mit dem Probengefäß koppelbar sein, und bei Bewegung in Richtung von der ersten Seite zu der zweiten Seite von dem Probengefäß entkoppelbar sein. In bestimmten Ausführungsformen kann das im zweiten Greifabschnitt vorgesehene zweite Werkzeug einen Stift aufweisen, der in eine entsprechende Ausnehmung am Probengefäß einführbar ist, um das Probengefäß in Richtung von der zweiten Seite zu der ersten Seite anzutreiben.

Die Greifvorrichtung kann insbesondere derart ausgebildet sein, dass der erste Greifabschnitt, insbesondere die erste Halterung, innerhalb einer Ebene parallel zum Probenträger verfahrbar ist und das erste Werkzeug in einer Richtung orthogonal zu der Ebene relativ zu dem ersten Greifabschnitt, insbesondere zu der ersten Halterung, verfahrbar ist. Der zweite Greifabschnitt, insbesondere die zweite Halterung, kann ebenfalls innerhalb einer Ebene parallel zum Probenträger verfahrbar ausgebildet sein, wobei das zweite Werkzeug in einer Richtung orthogonal zu der Ebene relativ zu dem zweiten Greifabschnitt, insbesondere zu der zweiten Halterung, verfahrbar ist. Das bedeutet, dass das erste und zweite Werkzeug im Wesentlichen das Probengefäß entlang des Hubwegs bewegen, entweder in Abgaberichtung vom der ersten Halterung zu einem Probenträger und/oder von einem Probenträger zu der zweiten Halterung (erstes Werkzeug) oder entgegen der Abgaberichtung von einem Probenträger zu der ersten Halterung oder von der zweiten Halterung zu der ersten Halterung (zweites Werkzeug). Der erste Halterung und auch die zweite Halterung brauchen dagegen nicht, oder jedenfalls nur in geringster Weise, entlang des Hubwegs bewegt zu werden - und zwar weder in Abgaberichtung noch in eine Richtung entgegengesetzt dazu. Es genügt, wenn die erste Halterung und die zweite Halterung im Wesentlichen in Ebenen parallel zum Probenträger bewegt werden, weil alle erforderlichen Bewegungen des Probengefäßes in einer Richtung orthogonal dazu - d.h. in Hubrichtung - vom ersten Werkzeug und vom zweiten Werkzeug ausgeführt werden können. Der erste Greifabschnitt kann somit so ausgebildet sein, dass er sich - abgesehen von dem ersten Werkzeug - im Wesentlichen nur innerhalb einer Ebene parallel zum Probenträger bewegt mit genügend Abstand zur Oberseite der im Probenträger aufgenommenen Probengefäße. Auch der zweite Greifabschnitt kann so ausgebildet sein, dass er sich - abgesehen von dem zweiten Werkzeug - im Wesentlichen nur innerhalb einer Ebene parallel zum Probenträger bewegt mit genügend Abstand zur Unterseite der im Probenträger aufgenommenen Probengefäße. Da der erste und der zweite Greifabschnitt somit lediglich in zwei Dimensionen - Länge und Breite - manipulierbar sein muss, kann die Greifvorrichtung wesentlich schneller arbeiten, als wenn noch eine zusätzliche Bewegung des ersten und des zweiten Greifabschnitts entlang der Hubrichtung erforderlich wäre.

Eine zur Durchführung des hier vorgeschlagenen Verfahrens ausgebildetet Greifvorrichtung zum Aufnehmen eines Probengefäßes, insbesondere eines mit einer Flüssigkeit gefüllten Probengefäßes, aus einem Probenträger, kann einen ersten Greifabschnitt aufweisen, welcher derart ausgebildet ist, dass er das Probengefäß von einer ersten Seite her ergreift, wobei der erste Greifabschnitt eine erste Halterung für das Probengefäß und ein erstes Werkzeug zum Bewegen des Probengefäßes entlang eines Hubwegs aufweist. Eine solche Greifvorrichtung kann außerdem einen zweiten Greifabschnitt aufweisen, welcher derart ausgebildet ist, dass er das Probengefäß von einer der ersten Seite gegenüber liegenden zweiten Seite her ergreift, wobei der zweite Greifabschnitt eine zweite Halterung für das Probengefäß aufweist. Es wird vorgeschlagen, dass dieser Greifvorrichtung eine Steuereinrichtung zugeordnet ist, die die Greifvorrichtung zu Durchführung des beschriebenen Verfahrens ansteuert. Beispielsweise kann die Steuereinrichtung eine elektronische Steuereinrichtung mit Prozessor und Speichereinheit sein, die derart programmiert ist, dass sie bei Ablauf ihres Steuerprogramms die Greifvorrichtung in entsprechender Weise ansteuert.

Zur Durchführung des hier beschriebene Verfahren kann eine Probenmanipulationsvorrichtung zum automatisierten Manipulieren von Probengefäßen, insbesondere von mit einer Flüssigkeit gefüllten Probengefäßen, vorgesehen sein, welche entlang vorgegebener Koordinaten relativ zu einem die Probengefäße aufnehmenden Probenträger bewegbar ist. Eine solche Probenmanipulationseinrichtung wird wenigstens eine Greifvorrichtung der vorangehend beschriebenen Art aufweisen. Insbesondere eignet sich eine Probenmanipulationsvorrichtung, deren Manipulatoreinheit oder Manipulatoreinheiten entlang kartesischer Achsen relativ zu dem Probenträger verfahrbar sind. Damit soll insbesondere gemeint sein, dass die Manipulatoreinheit oder jeweilige Manipulatoreinheiten zur Ausführung von Bewegungen in drei zueinander orthogonal stehenden Richtungen ansteuerbar ausgebildet sind. Die oben beschriebene Probenmanipulationseinrichtung kann ferner eine Steuereinrichtung aufweisen, die zur Durchführung des hier vorgeschlagenen Verfahrens konfiguriert ist.

Die Probenmanipulationseinrichtung kann zum Ablegen bzw. zum Entnehmen von Proben mit biologischem, mikrobiologischem und/oder chemischem Material aus Probenspeichereinrichtungen vorgesehen sein, wie sie in der chemischen, biochemischen, pharmazeutischen oder biologischen Industrie und Forschung eingesetzt werden. Die Proben können bestimmte Reagenzien enthalten, die chemischer, biochemischer oder biologischer Art sein können und unter vorgegebenen Umgebungsbedingungen gespeichtert werden sollen. Insbesondere können die Proben bei Gefriertemperaturen bis zu - 20 °C, insbesondere sogar zwischen - 50 °C und - 90 °C, und manchmal sogar darunter, gespeichert werden. Um einen großen Probendurchsatz zu erzielen, kann die Probenmanipulationseinrichtung mit einer Transporteinheit zum Transport von Probenträgern zwischen einem Speicherbereich für Probenträger und einer Probengefäß-Entnahmestation ausgestattet sein. Mittels der Greifvorrichtung können dann bei einem Probenentnahmevorgang in der Probengefäß-Entnahmestation einzelne Probengefäße aus dem Probenträger entnommen werden und in einem anderen Probenträger wieder abgelegt werden. Umgekehrt kann die Probenmanipulationseinrichtung auch zum Einlagern von Probengefäßen in die Probenspeichereinrichtung dienen. Hierzu können die entsprechenden einzulagernden Probenträger mittels der Greifvorrichtung aus einem ersten Probenträger entnommen werden und in einem weiteren Probenträger abgelegt werden, der anschließend mittels der Transporteinheit in den Speicherbereich gebracht wird.

Die vorliegende Erfindung betrifft gemäß einem weiteren Aspekt ein Speicherelement mit einem Speicherbereich oder einen Datenträger, in dem ein Computerprogramm gespeichert ist, wobei das Computerprogramm dazu ausgebildet ist, das hierin vorgeschlagene Verfahren auszuführen, wenn es in einer Steuereinrichtung ausgeführt wird, die eine Greifvorrichtung der hier beschriebenen Art ansteuert. Die Greifvorrichtung soll zum Aufnehmen eines Probengefäßes, insbesondere eines mit einer Flüssigkeit gefüllten Probengefäßes, aus einem Probenträger ausgebildet sein. Ferner soll die Greifvorrichtung einen ersten Greifabschnitt aufweisen, welcher derart ausgebildet ist, dass er das Probengefäß von einer ersten Seite her ergreift, wobei der erste Greifabschnitt eine erste Halterung für das Probengefäß und ein erstes Werkzeug zum Bewegen des Probengefäßes entlang eines Hubwegs aufweist. Ferner soll die Greifvorrichtung einen zweiten Greifabschnitt aufweisen, welcher derart ausgebildet ist, dass er das Probengefäß von einer der ersten Seite gegenüber liegenden zweiten Seite her ergreift, wobei der zweite Greifabschnitt eine zweite Halterung für das Probengefäß aufweist.

Die Erfindung wird nachfolgend durch Beschreibung eines Ausführungsbeispiels unter Bezugnahme auf die Zeichnungen näher erläutert. Es zeigt:

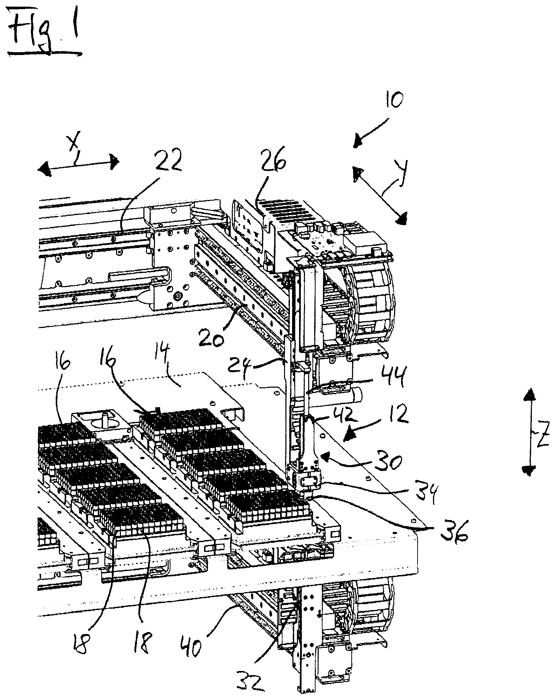

- Figur 1:: In perspektivischer Ansicht einen Ausschnitt einer Probenmanipulationsvorrichtung mit Greifvorrichtung gemäß einer Ausführungsform in einer Konfiguration bei einer Aufnahmemanipulation vor dem Entnehmen eines Probengefäßes aus einem Probenträger;

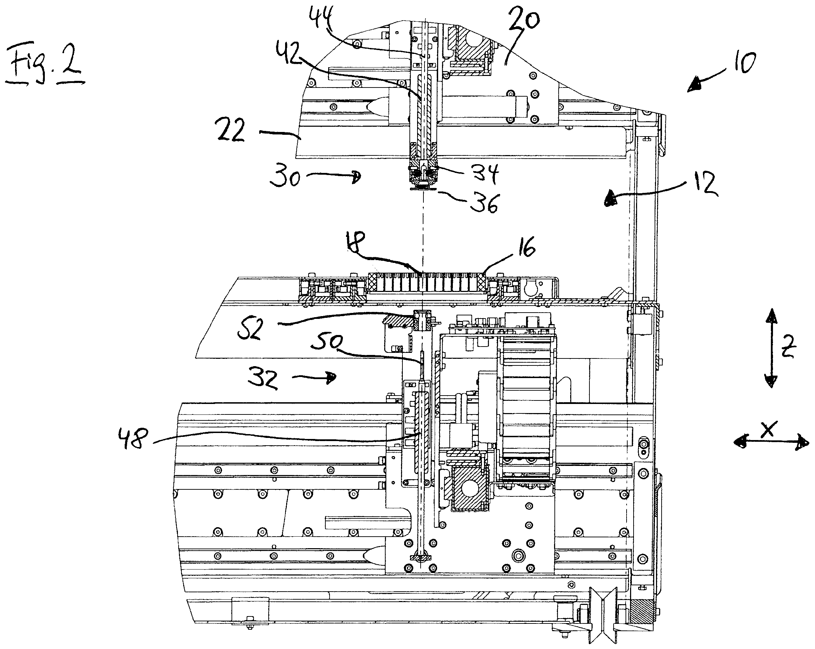

- Figur 2 bis 11:: In jeweils derselben Seitenansicht die Konfiguration der Greifvorrichtung in verschiedenen Stadien während einer Aufnahmemanipulation, bei der ein Probengefäß aus einem Entnahmeprobenträger mit Sicherungseinrichtung für Probenträger gegenüber Entnahme entnommen wird, und einer nachfolgenden Abgabemanipulation, bei der das Probengefäß in einen Zielprobenträger abgegeben wird.

In allen Figuren bezeichnen gleiche Bezugszeichen gleiche oder gleichartige Komponenten. Hinsichtlich einer näheren Beschreibung wird auf die jeweils erste Figur verwiesen, die eine jeweilige Komponente zeigt. Soweit nicht explizit anderes gesagt ist, gilt dieselbe Beschreibung auch für alle anderen Figuren. Diese werden in der Regel lediglich insoweit beschrieben, als Änderungen oder Ergänzungen zu den vorherigen Figuren zu erläutern sind. Es versteht sich, dass Ergänzungen sich jeweils auch auf die anderen Figuren beziehen.

Figur 1 zeigt in perspektivischer Ansicht einen Ausschnitt einer Probenmanipulationsvorrichtung 10 mit Greifvorrichtung 12 gemäß einer Ausführungsform. In der in Figur 1 gezeigten Situation befindet sich die Greifvorrichtung 12 in einer Konfiguration vor Beginn der Entnahme eines Probengefäßes 18 aus einem Entnahmeprobenträger 16 bei einer Aufnahmemanipulation (d.h. ein Probengefäß wird von der Greifvorrichtung 12 aus dem Entnahmeprobenträger aufgenommen). Die Probengefäße 18 sind in dem Probenträger 16 jeweils in Probengefäßaufnahmen aufgenommen. Die Aufnahme der Probengefäße in den einer jeweiligen Probengefäßaufnahme eines Probenträgers 16 erfolgte dabei in einer Abgabemanipulation durch die Greifvorrichtung 12, nämlich durch Bewegen jedes Probengefäßes 18 in einer Abgaberichtung - in der gezeigten Ausführungsform von oben nach unten - und Ablegen des Probengefäßes 18 in der jeweiligen Probengefäßaufnahme des Zielprobenträgers 16. Jede Probengefäßaufnahme weist eine nicht im Einzelnen dargestellte Rasteinrichtung auf, die mit einem jeweiligen in der Probengefäßaufnahme aufgenommenen Probengefäß 18 in Eingriff steht und dafür sorgt, dass ein in der Probengefäßaufnahme aufgenommenes Probengefäß 18 nicht mehr durch Anheben des Probengefäßes 18 - also durch Bewegen des Probengefäßes 18 in einer Richtung umgekehrt zur Abgaberichtung - aus der Probengefäßaufnahme entnommen werden kann. Um dennoch Probengefäße 18 aus den Probengefäßaufnahmen zu entnehmen, ist die Probenmanipulationsvorrichtung 10, insbesondere die Greifvorrichtung 12, zur Durchführung eines besonderen Verfahrens ausgebildet, das mit Hilfe der Figuren 2 bis 11 näher erläutert werden soll. Die Figuren 2 bis 11 zeigen in Seitenansicht die Konfiguration der Greifvorrichtung 12 in verschiedenen Stadien im Zuge einer Aufnahmemanipulation, bei der ein Probengefäß 18 durch die Greifvorrichtung 12 aus einem Entnahmeprobenträger 16 mit Sicherungseinrichtung von Probenträgern gegenüber Entnahme entnommen wird und einer nachfolgenden Abgabemanipulation, bei der das Probengefäß 18 dann von der Greifvorrichtung 12 in einen Zielprobenträger 16 abgegeben wird.

Die Probenmanipulationsvorrichtung 10 umfasst einen Probentisch 14 mit darauf gelagerten Probenträgern 16 (von denen in Figur 1 nur zwei Probenträger beispielhaft mit dem Bezugszeichen 16 versehen sind). Jeder Probenträger 16 umfasst eine Mehrzahl von Probengefäßaufnahmen, in denen einzelnen Probengefäße 18 (von denen in Figur 1 nur zwei Probengefäße beispielhaft mit dem Bezugszeichen 18 versehen sind) gelagert werden können. In der in Figur 1 gezeigten Konfiguration sind alle Probenträger 16 vollständig mit Probengefäßen 18 bestückt und die Greifvorrichtung 12 dient zur Ausführung einer Aufnahmemanipulation, bei der eines der Probengefäße 18 durch die Greifvorrichtung 12 aus dem Probenträger 16 aufgenommen wird.

Die Probengefäßaufnahmen sind in einem jeweiligen Probenträger 16 in Form einer rechtwinkligen Matrix angeordnet mit in dem gezeigten Ausführungsbeispiel 8 mal 12 = 96 Probengefäßen 18 pro Probenträger 16. Es versteht sich, dass anstelle der Konfiguration der Probenträger gemäß Figur 1 jede beliebige andere Konfiguration gewählt werden kann. Beispielsweise werden in der medizinischen und biochemischen Forschung standardmäßig Probenträger 16 mit 12, 24, 48, 96, oder 384 Probengefäßaufnahmen verwendet. Die Probengefäßaufnahmen können in Form einer rechtwinkligen Matrix mit Zeilen und Spalten wie in Figur 1 oder aber in beliebiger anderer Konfiguration angeordnet sein, beispielsweise mit Versatz zweier benachbarter Zeilen oder Spalten zueinander. Die Probengefäße 18 können jede beliebige Konfiguration haben, die zum jeweils verwendeten Probenträger 16 kompatibel ist. Übliche Probengefäße 18 weisen einen im Wesentlichen zylindrisch geformten Körperbereich auf mit einem auf die verwendeten Probenträger 16 abgestimmten Durchmesser, der in der Regel geringfügig kleiner ist als der Durchmesser der jeweils verwendeten Probenträgeraufnahmen. Darüber hinaus besitzen viele Probengefäße 18 Rasteinrichtungen an ihrem Umfang, die mit entsprechenden Rasteinrichtungen in einer jeweiligen Probengefäßaufnahme in Eingriff gelangen und so eine Rückwärtsbewegung des Probengefäßes 18 aus einer Probengefäßaufnahme heraus blockieren.

Die Probenträger 16 können mittels eines nicht im Detail gezeigten Probenträger-Beförderungssystems (auch als "Tray-Shuttle" bezeichnet) zwischen einem Speicherbereich für Probengefäße 18 und dem in den Figuren gezeigten Manipulationsbereich für Probengefäße 18 transportiert werden. Im Manipulationsbereich, der beispielsweise einer Eingangs-/Ausgangsschnittstelle einer Probenspeichervorrichtung zugeordnet sein kann, arbeitet die Greifvorrichtung 12. Die Greifvorrichtung 12 ist derart ausgebildet, dass sie aus Probenträgern 16, die sich im Manipulationsbereich befinden, Probengefäße 18 einzeln aus dem jeweils zugeordneten Probenträger 16 entnehmen kann oder Probengefäße 18 einzeln in einer Probengefäßaufnahme eines Probenträgers 16, der sich im Manipulationsbereich befindet, ablegen kann. Zu diesem Zweck weist die Probenmanipulationseinrichtung 10 einen ersten Manipulatorarm 20 auf, der in einer ersten Richtung (x-Richtung) entlang eines ersten Linearführungsmechanismus 22 mittels eines nicht im Einzelnen gezeigten Antriebs linear verfahrbar ist. Der erste Manipulatorarm 20 verläuft dabei im Wesentlichen entlang einer zweiten Richtung (y-Richtung), die orthogonal zu der ersten Richtung ist. Die erste und die zweite Richtung spannen eine Ebene auf, die im Folgenden als xy-Ebene bezeichnet wird. Im gezeigten Ausführungsbeispiel verläuft die xy-Ebene im Wesentlichen horizontal. Am ersten Manipulatorarm 20 ist ein zweiter Manipulatorarm 24 linear entlang des ersten Manipulatorarms 20 beweglich gelagert. Der zweite Manipulatorarm 24 verläuft im Wesentlichen orthogonal zu der xy-Ebene und ist linear entlang des ersten Manipulatorarms 20 (also in y-Richtung) verlagerbar. Hierfür dient ein allgemein mit 26 bezeichneter Antrieb. Der erste Manipulatorarm 20 weist dabei einen nicht im Einzelnen bezeichneten Führungsmechanismus für die Linearbewegung des zweiten Manipulatorarms 24 in y-Richtung auf. Durch Bewegung des ersten Manipulatorarms 20 entlang des Führungsmechanismus 22 sowie des zweiten Manipulatorarms 24 entlang des ersten Manipulatorams 20 kann der zweite Manipulatorarm 24 damit jede Position in der xy-Ebene oberhalb (d.h. in vertikaler Projektion nach oben) der Probenträgeraufnahmen auf dem Probentisch 14 erreichen.

Am zweiten Manipulatorarm 24 ist die Greifvorrichtung 12 angeordnet, genauer gesagt, ist ein erster Greifabschnitt 30 der Greifvorrichtung 12 am zweiten Manipulatorarm 24 angeordnet, wie nachfolgend noch genauer beschrieben. Der erste Greifabschnitt 30 ist dabei in einer solchen Weise an dem zweiten Manipulatorarm 24 gelagert, dass der erste Greifabschnitt 30 zwar prinzipiell entlang des zweiten Manipulatorarms 24 - und damit in einer Richtung orthogonal zu der xy-Ebene (z-Richtung oder Hubrichtung) - verlagerbar ist. Wie nachfolgend noch im Detail erläutert werden wird, sind im Zusammenhang mit der vorliegenden Erfindung Bewegungen des ersten Greifabschnitts 30 orthogonal zur xy-Ebene auf ein Minimum reduziert.Hierin liegt ein wesentlicher Geschwindigkeitsvorteil bei Aufnahme- und Abgabemanipulationen durch die hier vorgeschlagene Greifvorrichtung 12. Der erste Greifabschnitt 30 ist in einer solchen Höhe bezüglich des Probentischs 14 angeordnet, dass der erste Greifabschnitt 30 sich in genügendem Abstand oberhalb der Oberseite der in den Probenträgern 16 gelagerten Probengefäße 18 befindet, dass weder beim Verfahren des zweiten Manipulatorarms 24 entlang des ersten Manipulatorarms 20 noch beim Verfahren des ersten Manipulatorarms 20 entlang des Führungsmechanismus 22 eine Kollision mit in den Probenträgern 16 aufgenommen Probengefäßen auftritt. Wie bereits angesprochen, soll eine Bewegung des ersten Greifabschnitts 30 der Greifvorrichtung 12 in z-Richtung im Zuge einer Aufnahmemanipulation oder im Zuge einer Abgabemanipulation möglichst nicht stattfinden oder jedenfalls auf das geringst mögliche Maß beschränkt sein.

In Figur 1 sieht man, dass der erste Greifabschnitt 30 an einem unteren Ende des zweiten Manipulatorarms 24 (zumindest eines Abschnitts des zweiten Manipulatorarms 24, der an dem ersten Manipulatorarm 20 gelagert ist) angeordnet ist. Am ersten Greifabschnitt 30 befindet sich eine erste Halterung 34, die zur Fixierung eines durch den ersten Greifabschnitt 30 aufzunehmenden Probengefäßes 18 dient. Die erste Halterung 34 ist dabei fest am Manipulatorarm 24 angebracht und somit nur zusammen mit dem Manipulatiorarm 24 beweglich. Der erste Greifabschnitt 30 umfasst außerdem noch eine Zentriereinrichtung 36. Die Zentriereinrichtung 36 ist der ersten Halterung 34 zugeordnet und zwar in dem Sinn, dass die Zentriereinrichtung 36 der ersten Halterung 34 vorgelagert ist, bezogen auf einen gedachten Hubweg (also eine Bewegung in z-Richtung) eines in die erste Halterung 34 aufgenommenen Probengefäßes 18, beispielsweise vom Probenträger 16 weg zu der ersten Halterung 34. Wie in Figur 1 gezeigt, kann die Zentriereinrichtung 36 an der ersten Halterung 34 angebracht sein, insbesondere an einer Unterseite der ersten Halterung 34. Die erste Halterung 34 kann lösbar an dem zweiten Manipulatorarm 24 angebracht sein, beispielsweise mittels einer Schraubverbindung.

Die Greifvorrichtung 12 weist zudem einen zweiten Greifabschnitt 32 auf. Der zweite Greifabschnitt 32 ist unterhalb des Probentischs 14 angeordnet und befindet sich daher unterhalb der in den Probenträgern 16 aufgenommenen Probengefäße 18. Der zweite Greifabschnitt 32 kann in einer solchen Weise mit dem ersten Greifabschnitt 30 gekoppelt sein, dass bei Bewegung des ersten Greifabschnitts 30 in der xy-Ebene der zweite Greifabschnitt 32 sich in einer zu der xy-Ebene parallelen Ebene mitbewegt. Dies lässt ich beispielsweise dadurch realisieren, dass der zweite Greifabschnitt 32 an einem zu dem ersten Manipulatorarm 20 parallelen Manipulatorarm 40 angebracht ist, wobei der Manipulatorarm 40 an einer zu dem Führungsmechanismus 22 parallelen Führungseinrichtung geführt ist. Gemeinsame Bewegung der beiden Manipulatorarme 20 und 40 in x-Richtung kann durch entsprechende mechanische Kopplung der beiden Manipulatorarme 20 und 40 erfolgen. Gemeinsame Bewegung des ersten Greifabschnitts 30 entlang des ersten Manipulatorarms 24 und des zweiten Greifabschnitts 32 entlang des Manipulatorarms 40 (also in y-Richtung) kann beispielsweise dadurch erfolgen, dass dem ersten Greifabschnitt 30 und dem zweiten Greifabschnitt 32 je ein eigener Antrieb zugeordnet ist, und die Antriebe durch geeignete Mechanismen (elektrisch und/oder mechanisch) miteinander synchronisiert sind. Andere Arten der Kopplung zwischen dem ersten und dem zweiten Greifabschnitt 30 und 32, insbesondere zwischen den beiden Manipulatorarmen 20 und 40, sind selbstverständlich denkbar. Von Vorteil ist dabei, wenn die Kopplung zwischen dem ersten Greifabschnitt 30 und dem zweiten Greifabschnitt 32 lösbar ist, so dass der erste Greifabschnitt 30 in bestimmten Situationen relativ zu dem zweiten Greifabschnitt 32 in der xy-Ebene verfahrbar ist, falls gewünscht. Dies bedeutet, dass insbesondere die beiden Manipulatorarme 20 und 40 in einem Modus mit erfolgter Trennung über je einen eigenen unabhängig arbeitenden Antrieb verfügen und unabhängig voneinander entlang des Führungsmechanismus 22 verlagert werden können.

In Figur 1 sieht man, dass der zweite Greifabschnitt 32 an einem oberen Ende eines von dem Manipulatorarm 40 nach oben ragenden Armabschnitts angeordnet ist. Der zweite Greifabschnitt 32 umfasst eine zweite Halterung 52 (siehe Figuren 2 bis 11) und ein zweites Werkzeug 48 in der Konfiguration eines oben ausfahrbaren Stempels 50 (siehe Figuren 2 bis 11).

Zum Aufnehmen eines "normalen" Probengefäßes 18 aus einem Probenträger 16, d.h. eines Probengefäßes 18, das nicht mittels Sicherungseinrichtungen gegenüber Entnehmen des Probengefäßes 18 aus der Probengefäßaufnahme durch Bewegung in einer Richtung entgegen der Abgaberichtung (im gezeigten Ausführungsbeispiel durch Bewegung nach oben) gesichert ist, fahren zunächst der erste und der zweite Manipulatorarm 20, 24 in eine Stellung, bei der der erste Greifabschnitt 30 und der zweite Greifabschnitt 32 sich in einer Projektion einer zentralen Achse der jeweiligen Probengefäßaufnahme in Richtung der z-Achse befinden und einander oberhalb und unterhalb der Probengefäßaufnahme gegenüber liegen. Ist diese Stellung erreicht, so fährt der zweite Greifabschnitt 32 mit seinem zweiten Werkzeug 48 nach oben, bis der Stempel 50 des zweiten Werkzeugs 48 in Anlage mit einer Unterseite des jeweiligen Probengefäßes 18 gelangt. Sobald der Anlagekontakt hergestellt ist, hebt das zweite Werkzeug 48 im Zuge seiner weiteren Aufwärtsbewegung das Probengefäß 18 an, bis die Oberseite des Probengefäßes 18 in Eingriff mit der am ersten Greifabschnitt 30 angebrachten ersten Halterung 34 gelangt. Sobald das Probengefäß 18 in Eingriff mit der ersten Halterung 34 ist, wird das zweite Werkzeug 48 nicht mehr benötigt und wieder zu seiner Ausgangsstellung zurückgefahren. Die weitere Manipulation des Probengefäßes, insbesondere dessen Verlagerung innerhalb der xy-Ebene erfolgt dann durch den ersten Greifabschnitt 30.

Der erste Greifabschnitt 30 weist zudem noch ein erstes Werkzeug 42 auf. Das erste Werkzeug 42 dient normalerweise, d.h. beim Ablegen und/oder Entnehmen von "normalen", also ungesicherten Probengefäßen 18, insbesondere der Unterstützung beim Lösen eines Eingriffs zwischen Probengefäß 18 und erster Halterung 34, wie dies im Zuge einer Abgabemanipulation erforderlich ist. Wie aus Figur 1 ersichtlich ist, ist das erste Werkzeug 42 an dem zweiten Manipulatorarm 24 so angeordnet, dass es sich oberhalb der Oberseite der in den Probenträgern 16 auf dem Probentisch 14 aufgenommenen Probengefäße 18 befindet. Das erste Werkzeug 42 befindet sogar so weit oberhalb, dass es von oberhalb eines in der ersten Halterung 34 gehaltenen Probengefäßes 18 in Anlage mit diesem Probengefäß 18 gelangt. Ebenso wie das am zweiten Greifabschnitt 32 vorgesehene zweite Werkzeug 48 kann auch das erste Werkzeug 42 beispielsweise einen Stempel 44 umfassen, der allerdings nach unten, also in umgekehrter Richtung wie das zweite Werkzeug 48, ausfahrbar ist. Zum Ablegen eines in der ersten Halterung 34 gehaltenen Probengefäßes 18 in einen Probenträger 16 durch den ersten Greifschnitt 30 fahren zunächst der erste und der zweite Manipulatorarm 20, 24 in eine Stellung, bei der die erste Halterung 34 sich einer Projektion einer zentralen Achse der jeweiligen Probenaufnahme in Richtung der z-Achse befinden. Ist diese Stellung erreicht, so fährt das erste Werkzeug 42 mit seinem Stempel 44 nach unten, bis der Stempel 44 in Anlage mit einer Oberseite des jeweiligen Probengefäßes 18 gelangt. Sobald der Anlagekontakt hergestellt ist, drückt der Stempel 44 im Zuge seiner weiteren Abwärtsbewegung das Probengefäß 18 nach unten, um den Eingriff des Probengefäßes 18 mit der ersten Halterung 34 zu lösen. Das Probengefäß 18 fällt dann aufgrund seiner Schwerkraft nach unten und wird in der zugeordneten Probenaufnahme des Probenträgers 16 aufgefangen. Unterstützend kann bei diesem Vorgang auch das zweite Werkzeug 48 des zweiten Greifabschnitts 32 mitwirken, indem das zweite Werkzeug 48 vor dem Lösung des Eingriffs zwischen Probengefäß 18 und erster Halterung 34 nach oben gefahren wird und dann nach dem Lösen des Eingriffs die Fallbewegung des Probengefäßes 18 abfängt und so das Probengefäß 18 sanft nach unten führt.

Wenn ein Probengefäß 18 in einer Aufnahme des Probenträgers 16 gesichert gegen Entnahme in einer Richtung entgegen der Abgaberichtung (d.h. gesichert gegen Bewegung nach oben in der in den Figuren dargestellten Situation) aufgenommen ist, kann eine Entnahme des Probengefäßes 18 aus dem Probenträger 16 nicht mehr in derselben Weise wie oben für normale Probengefäße 18 beschrieben durch einfaches Anheben des Probengefäßes 18 mittels des zweiten Werkzeugs 48 erfolgen. Damit auch eine Entnahme solcher Probengefäße durch die Greifvorrichtung 12 ohne weitere Modifikationen möglich ist, ist in diesem Fall ein besonderes Verfahren vorgesehen, das nachfolgend unter Bezugnahme auf die Figuren 2 bis 11 näher erläutert wird.

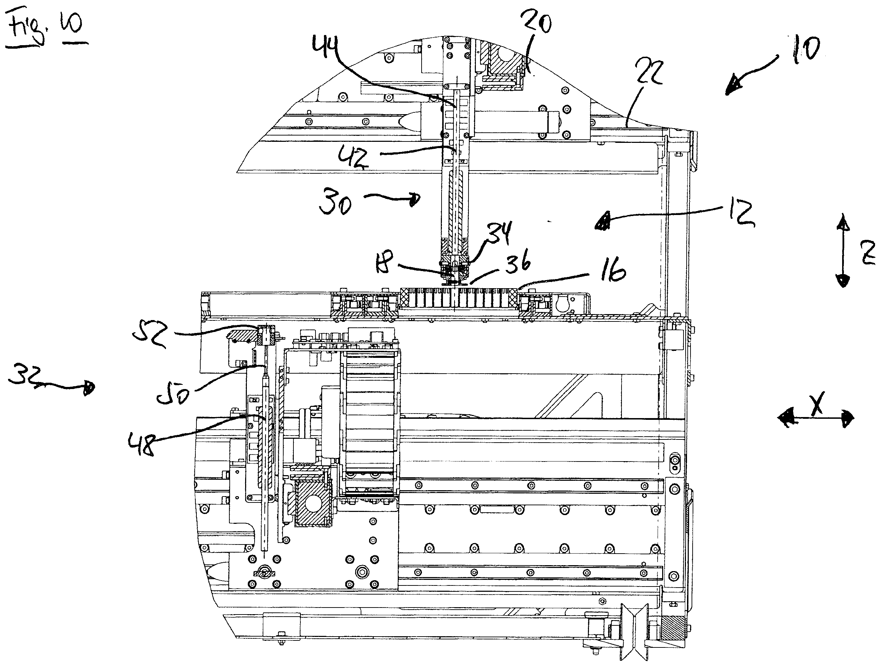

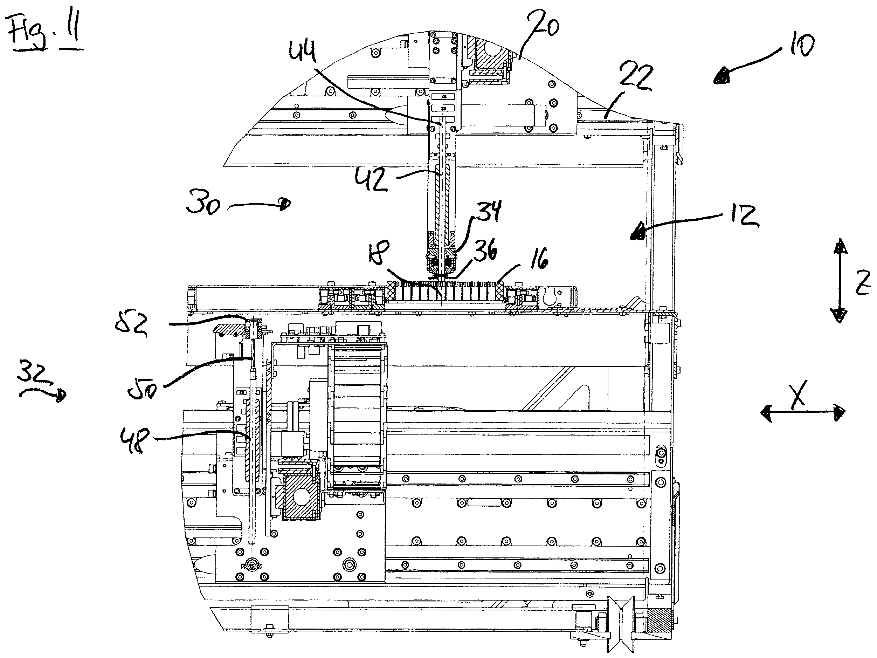

Die Figuren 2 bis 11 zeigen in Seitenansicht die Konfiguration der Greifvorrichtung 12 in verschiedenen Stadien während einer Aufnahmemanipulation, bei der ein Probengefäß 18 aus einem Entnahmeprobenträger 16 mit Sicherungseinrichtung von Probengefäßen 18 gegenüber Entnahme aus einer Probengefäßaufnahme entnommen wird (Figur 2 bis 9), und einer nachfolgenden Abgabemanipulation, bei der das Probengefäß in einen Zielprobenträger 16 abgegeben wird (Figur 10 und 11).

Figur 2 zeigt die Situation vor Beginn der Aufnahmemanipulation. Das aus dem Entnahmeprobenträger 16 aufzunehmende Probengefäß 18 befindet sich noch in der Probengefäßaufnahme des Probenträgers 18. Eine Bewegung des Probengefäßes 18 nach oben aus der Probenaufnahme heraus wird durch die Sicherungseinrichtung blockiert.

In Figur 2 erkennt man, dass auch der zweite Greifabschnitt 32 neben dem zweiten Werkzeug 48 noch über eine zweite Halterung 52 verfügt. Die zweite Halterung 52 dient der temporären Aufnahme eines Probengefäßes 18 im Zuge einer Aufnahmemanipulation, wie nachfolgend noch näher erläutert werden wird. Grundsätzlich kann die zweite Halterung 52 dieselbe Konfiguration aufweisen wie die erste Halterung 34. Da die zweite Halterung 52 ein jeweiliges Probengefäß nur temporär halten muss und die Manipulationswege bei diesem Vorgang recht kurz sind, kann unter Umständen auf eine eigene der zweiten Halterung zugeordnete Zentriereinrichtung verzichtet werden. Grundsätzlich spricht aber nichts dagegen, auch bei der zweiten Halterung 52 eine solche Zentriereinrichtung vorzusehen. Für deren Aufbau und Funktionsweise gilt das im Zusammenhang mit der der ersten Halterung 34 zugeordneten Zentriereinrichtung bereits Beschriebene in entsprechender Weise, so dass auf Wiederholung verzichtet wird.

In der in Figur 2 dargestellten Situation hat sich der erste Greifabschnitt 30 mit seiner ersten Halterung 34 in der xy-Ebene in eine Position auf einer ersten Seite (oberhalb) des aus dem Probenträger 16 zu entnehmenden Probengefäßes 18 bewegt. Dementsprechend befindet sich auch der zweite Greifabschnitt 32 in einer Position in der xy-Ebene auf einer der ersten Seite gegenüber liegenden zweiten Seite (unterhalb) des aus dem Probenträger 16 zu entnehmenden Probengefäßes 18. Der erste Greifabschnitt 30, insbesondere dessen erste Halterung 34, liegt dem zweiten Greifabschnitt 32, insbesondere dessen zweiter Halterung 48, entlang des Hubwegs (d.h. in z-Richtung) gegenüber.

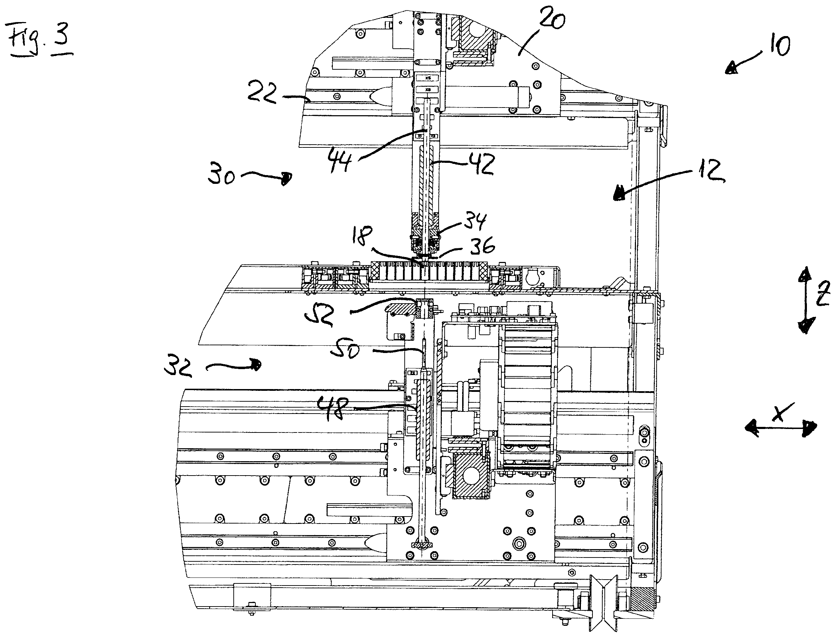

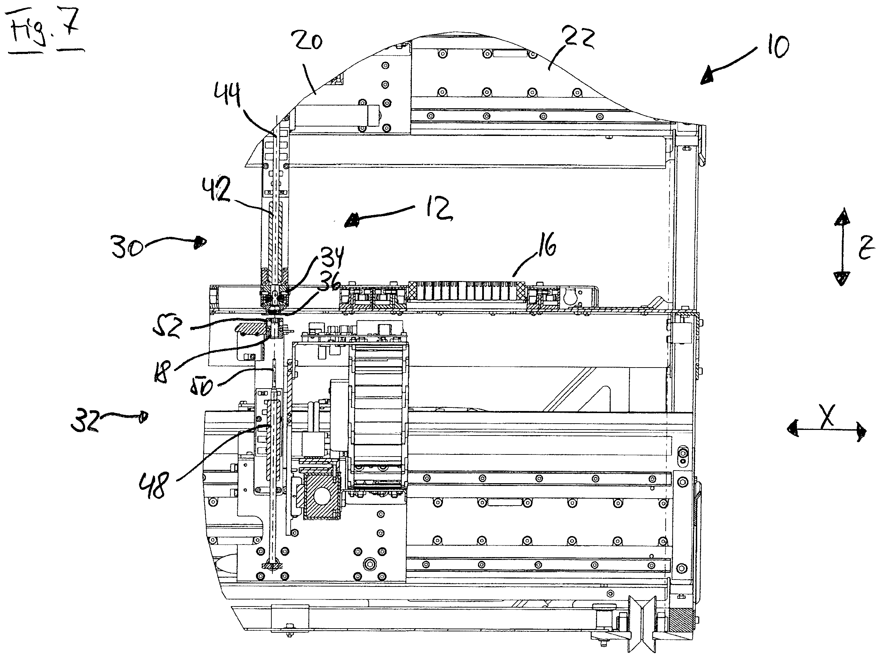

Figur 3 zeigt den nachfolgenden Schritt des In Eingriff Bringens des ersten Werkzeugs 42 des ersten Greifabschnitts 30 mit dem Probengefäß 18. Dieser Eingriff erfolgt von der ersten Seite her (d.h. von oben), und zwar durch in Anlage Bringen des Stempels 44 des ersten Werkzeugs mit einer Oberseite des Probengefäßes im Zuge einer Bewegung des Stempels 44 von oben nach unten. Figur 3 zeigt auch, dass im Zuge dieses Vorgangs der gesamte erste Greifabschnitt 30 durch entsprechende Bewegung des Manipulatorarms 24 von oben nach unten bewegt wurde. Eine solche Bewegung ist nicht unbedingt notwendig. Sie kann jedoch sinnvoll sein, um den erforderlichen Bewegungsweg des ersten Werkzeugs 42 in z-Richtung (von oben nach unten) zu begrenzen und damit der Manipulation mehr Stabilität zu verleihen. Grundsätzlich wird angestrebt, Bewegungen des ersten Greifabschnitts 30 und des zweiten Greifabschnitts 32 in z-Richtung - abgesehen von Bewegungen des ersten Werkzeugs 42 relativ zum ersten Greifabschnitt 30 und von Bewegungen des zweiten Werkzeugs 48 relativ zum zweiten Greifabschnitt 32 - soweit als möglich zu begrenzen, denn es bringt Geschwindigkeitsvorteile, wenn der erste Greifabschnitt 30 und der zweite Greifabschnitt 32 nur in der xy-Ebene bewegt werden müssen. Der Gewinn an Zuverlässigkeit kann allerdings groß genug, dass die in Figur 3 dargestellte kurze Bewegung des ersten Greifabschnitts 30 in z-Richtung (ebenso wie die weitere kurze Bewegung des ersten Greifabschnitts 30 in z-Richtung auf den zweiten Greifabschnitt 32 zu, die in Figur 7 dargestellt ist), sinnvoll sein können.

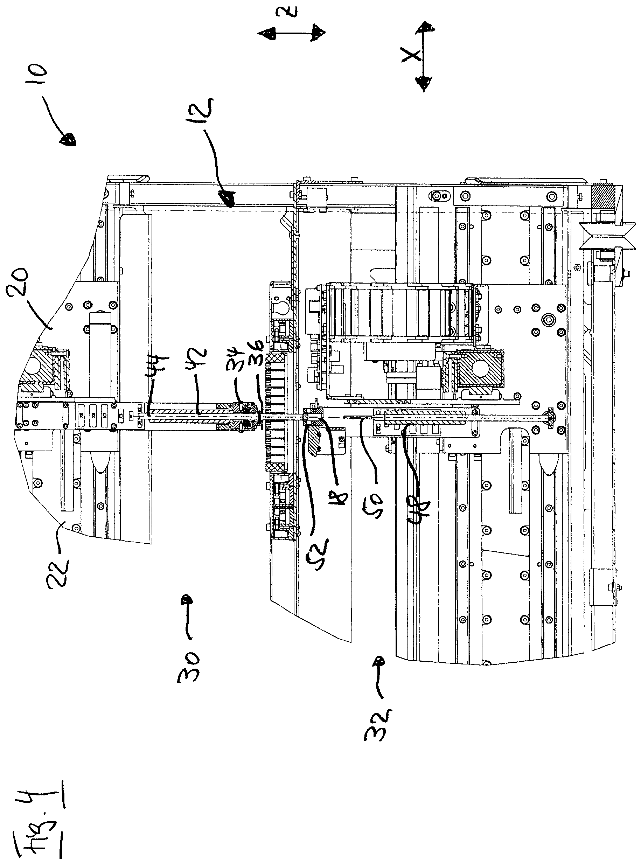

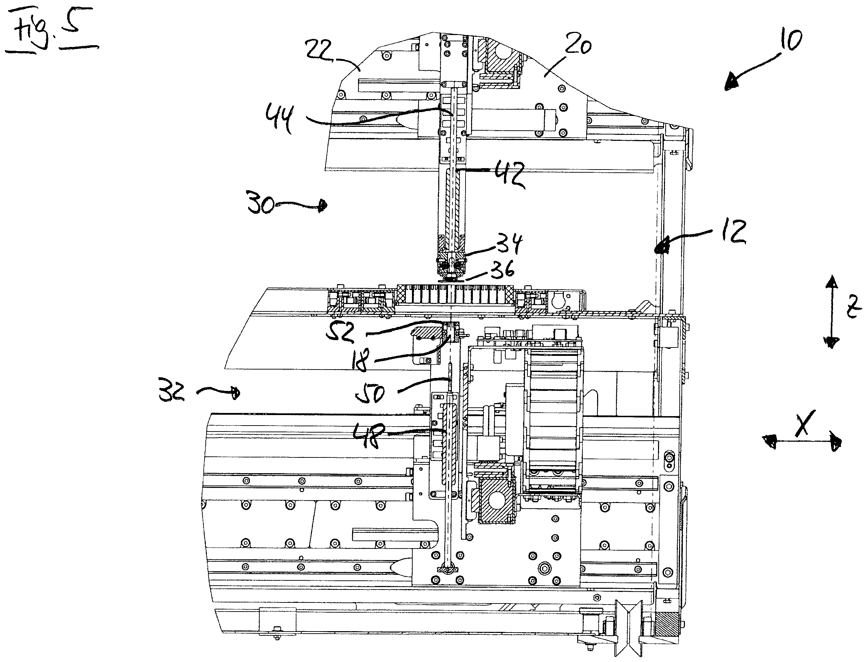

Figur 4 zeigt nun, dass das erste Werkzeug 42 des ersten Greifabschnitts 30 in z-Richtung manipuliert wird und zwar so, dass sich der Stempel 44 des ersten Werkzeugs 42 auf das zu entnehmende Probengefäß 18 von der ersten Seite her zu bewegt und in Anlage mit dem Probengefäß gelangt. In Figur 4 bewegt sich hierzu das erste Werkzeug 42 von oben nach unten, bis der Stempel 44 mit einer Oberseite des Probengefäßes 18 in Anlagekontakt gelangt. Bei Weiterbewegung des ersten Werkzeugs in der beschriebenen Richtung - also von oben nach unten - schiebt der Stempel 44 des ersten Werkzeugs 42 das Probengefäß 18 in der Probengefäßaufnahme von oben nach unten. Die hierbei vom ersten Werkzeug 42 ausgeübte Kraft ist groß genug, dass dabei ein Boden der Probengefäßaufnahme durchstoßen wird und damit das Probengefäß 18 entlang des Hubwegs in Richtung von der ersten Seite zu der zweiten Seite bewegt wird. Anders ausgedrückt: Das erste Werkzeug 42 drückt das Probengefäß 18 durch den Boden der Probengefäßaufnahme hindurch nach unten bis in einen Bereich unterhalb des Probenträgers 16. Die Bewegung des Probengefäßes 18 nach unten endet, sobald das Probengefäß 18 in der zweiten Halterung 52 des zweiten Greifabschnitts 32 aufgenommen ist. Die zweite Halterung 52 des zweiten Greifabschnitts 32 liegt - wie bereits beschrieben - der ersten Halterung 34 entlang des Hubwegs (z-Richtung) genau gegenüber, und zwar auf der zweiten Seite des Probenträgers 16, also unterhalb des Probenträgers 16. Die zweite Halterung 52 nimmt damit das Probengefäß 18 temporär auf, so dass dieses gemeinsam mit der zweiten Halterung 48 manipuliert werden kann. Dieser Zustand ist in Figur 4 dargestellt. Figur 5 zeigt, dass sich nunmehr das zunächst nicht weiter benötigte erste Werkzeug 42 wieder in seine Ausgangsstellung zurückzieht, so dass der erste Greifabschnitt 30 wieder vollständig oberhalb der im Probenträger 16 aufgenommenen Probengefäße 18 befindet und der erste Greifabschnitt 30 damit störungsfrei in der xy-Ebene verfahren werden kann.

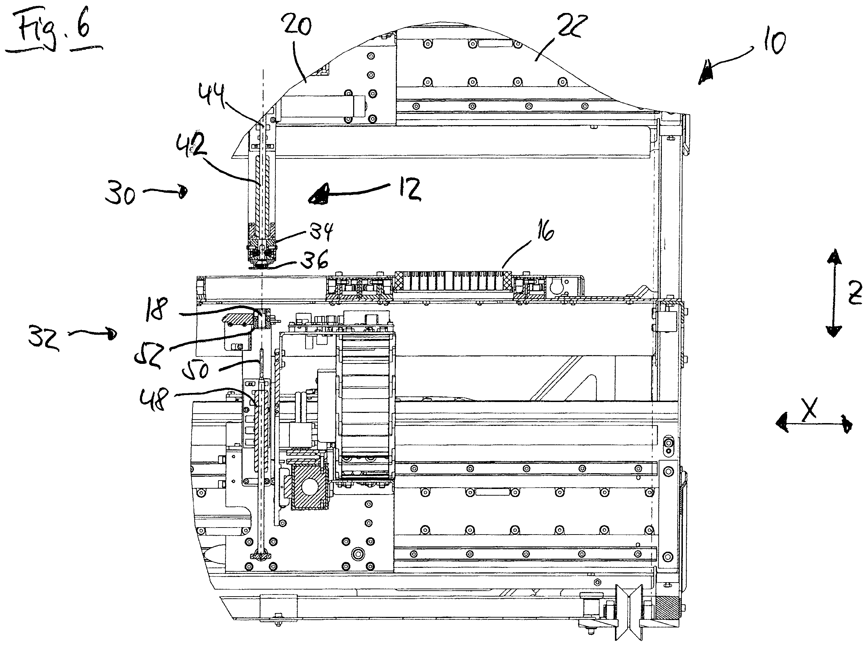

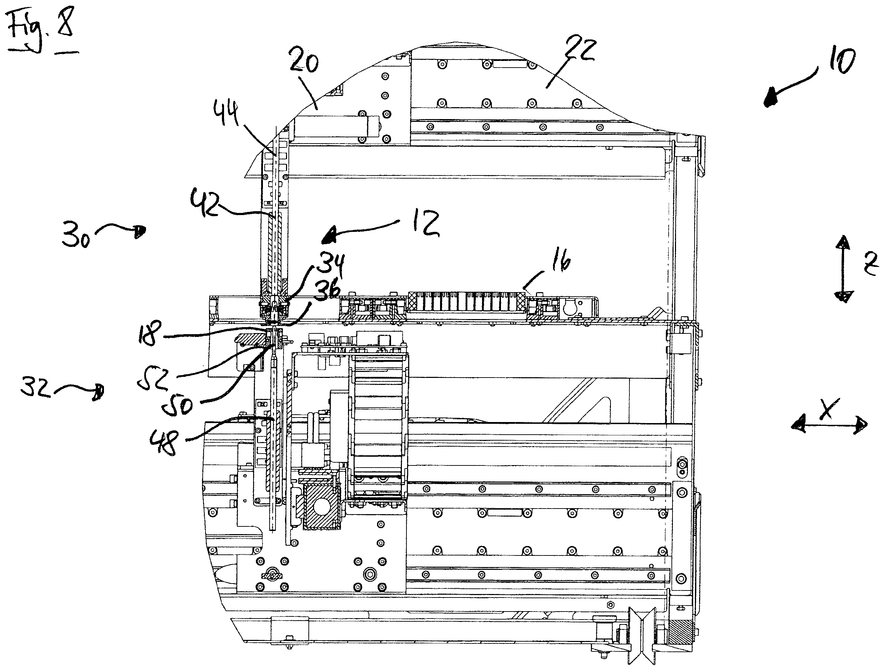

Figur 6 zeigt, dass nunmehr der erste Greifabschnitt 30 und der zweite Greifabschnitt 32 in einer orthogonal zum Hubweg (z-Richtung) verlaufenden lateralen Richtung (in der xy-Ebene) verlagert werden und eine neue Position in der xy-Ebene anfahren. Eine Bewegung des ersten Greifabschnitts 30 und des zweiten Greifabschnitts 32 in der z-Richtung findet dabei nicht statt. Die neue Position des ersten Greifabschnitts 30 und des zweiten Greifabschnitts 32 in der xy-Ebene ist derart gewählt, dass das nunmehr in der zweiten Halterung 52 aufgenommene Probengefäß 18 in einem nicht von dem Probenträger 16 oder einem anderen Probenträger 16 eingenommenen freien Bereich angeordnet ist. Damit liegt in dieser neuen Position der erste Greifabschnitt 30, insbesondere dessen erste Halterung 34, auf der ersten Seite des - nunmehr in der zweiten Halterung 52 des zweiten Greifabschnitts 32 aufgenommenen - Probengefäßes 18 dem zweiten Greifabschnitt 32, insbesondere der zweiten Halterung 52, entlang des Hubwegs gegenüber. Dies ermöglicht eine nachfolgende Bewegung des Probengefäßes 18 in der Hubrichtung (z-Richtung), um das Probengefäß 18 von der zweiten Halterung 52 zu lösen und in der ersten Halterung 34 aufzunehmen (siehe Figur 8).

Figur 7 zeigt, dass vor dem Schritt des Bewegens des Probengefäßes 18 entlang des Hubwegs in entgegengesetzter Richtung von der zweiten Seite zu der ersten Seite und In Eingriff Bringen des Probengefäßes 18 mit der im ersten Greifabschnitt 30 vorgesehenen Halterung 34 in einem Zwischenschritt noch der gesamte erste Greifabschnitt 30 durch entsprechende Bewegung des Manipulatorarms 24 von oben nach unten bewegt wird. Eine solche Bewegung ist nicht unbedingt notwendig. Sie kann jedoch sinnvoll sein, um den Abstand zwischen der ersten Halterung 34 und der zweiten Halterung 52 zu minimieren und damit den erforderlichen Bewegungsweg des zweiten Werkzeugs 48 in z-Richtung (von unten nach oben) zu begrenzen. Auf diese Weise kann der der Manipulation mehr Stabilität verliehen werden. Auch wenn grundsätzlich aus Gründen der möglichst schnellen Manipulierbarkeit angestrebt wird, Bewegungen des ersten Greifabschnitts 30 und des zweiten Greifabschnitts 32 in z-Richtung - abgesehen von Bewegungen des ersten Werkzeugs 42 relativ zum ersten Greifabschnitt 30 und von Bewegungen des zweiten Werkzeugs 48 relativ zum zweiten Greifabschnitt 32 - soweit als möglich zu begrenzen, kann die in Figur 7 dargestellte Bewegung des ersten Greifabschnitts 30 in z-Richtung auf den zweiten Greifabschnitt 32 zu eine sinnvolle Ergänzung sein.

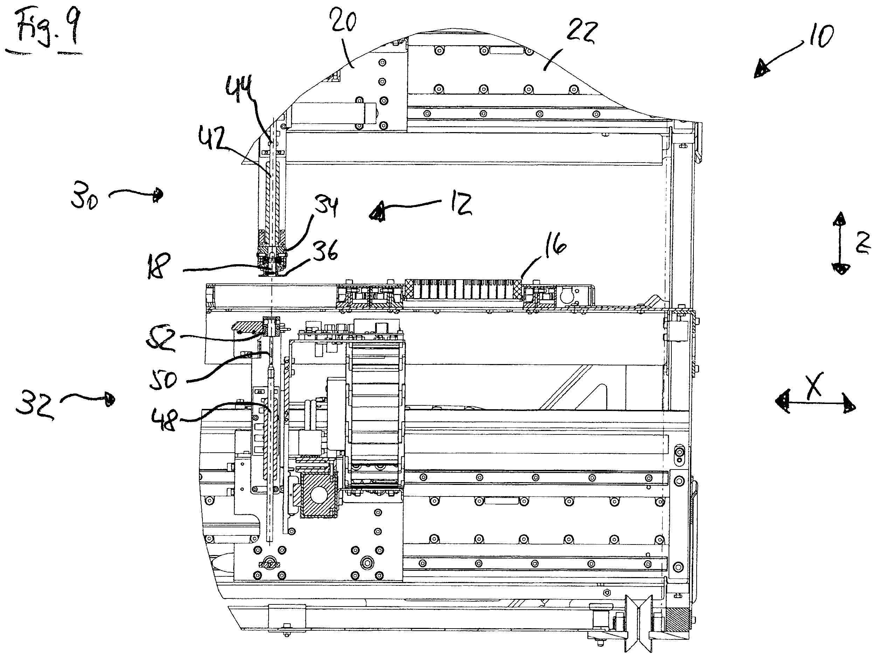

Wie in Figur 8 dargestellt, erfolgt dann der eigentliche Schritt des Bewegens des Probengefäßes 18 entlang des Hubwegs (z-Richtung) in entgegengesetzter Richtung von der zweiten Seite zu der ersten Seite (von unten nach oben) und des In Eingriff Bringens des Probengefäßes 18 mit der im ersten Greifabschnitt 30 vorgesehenen ersten Halterung 34. Diese Manipulation erfolgt durch Eingriff von der zweiten Seite her (d.h. von unten), und zwar durch in Anlage Bringen des Stempels 50 des zweiten Werkzeugs 48 mit einer Unterseite des Probengefäßes 18 im Zuge einer Bewegung des Stempels 50 von unten nach oben. Das zweite Werkzeug 48 bewegt sich dann von unten nach oben, bis das Probengefäß 18 mit der ersten Halterung 34 in Eingriff gelangt. Ab diesem Zustand, der in Figur 8 dargestellt ist, wird der zweite Greifabschnitt 32 zur weiteren Manipulation nicht mehr benötigt. Das zweite Werkzeug 48 zieht sich in seine Ausgangsstellung zurück, wiein Figur 9 dargestellt. Zur weiteren Abgabemanipulation wird nur noch der erste Greifabschnitt 30 manipuliert. Der erste Greifabschnitt 30 verharrt in seiner Position, wie in Figur 8 dargestellt. Dazu wird die Kopplung zwischen erstem Greifabschnitt 30 und zweitem Greifabschnitt 32 gelöst.

Die in Figur 10 und 11 dargestellte Abgabemanipulation des nunmehr in der ersten Halterung 34 aufgenommenen Probengefäßes 18 in einen Zielprobenträger 16 (dieser wird in der Regel nicht mit dem Entnahmeprobenträger 16 identisch sein) entspricht der bereits beschriebenen Abgabemanipulation für ungesicherte Probengefäße 18, so dass auf die obigen Ausführungen verwiesen werden kann. Wie in Figur 10 gezeigt, fährt der erste Greifabschnitt in eine Stellung, bei der die erste Halterung 34 sich einer Projektion einer zentralen Achse der jeweiligen Probenaufnahme in Richtung der z-Achse befindet. Ist diese Stellung erreicht, so fährt das erste Werkzeug 42 mit seinem Stempel 44 nach unten, bis der Stempel 44 in Anlage mit einer Oberseite des jeweiligen Probengefäßes 18 gelangt (Figur 11). Sobald der Anlagekontakt hergestellt ist, drückt der Stempel 44 im Zuge seiner weiteren Abwärtsbewegung das Probengefäß 18 nach unten, um den Eingriff des Probengefäßes 18 mit der ersten Halterung 34 zu lösen. Das Probengefäß 18 fällt dann aufgrund seiner Schwerkraft nach unten und wird in der zugeordneten Probenaufnahme des Probenträgers 16 aufgefangen. Unterstützend kann bei diesem Vorgang auch das zweite Werkzeug 48 des zweiten Greifabschnitts 32 mitwirken, indem das zweite Werkzeug 48 vor dem Lösung des Eingriffs zwischen Probengefäß 18 und erster Halterung 34 nach oben gefahren wird und dann nach dem Lösen des Eingriffs die Fallbewegung des Probengefäßes 18 abfängt und so das Probengefäß 18 sanft nach unten führt. In der gezeigten Ausführungsform ist dies allerdings nicht der Fall, sondern die Abgabemanipulation erfolgt ohne Mitwirkung durch den zweiten Greifabschnitt 32.

## Patentansprüche

1. Verfahren zum Aufnehmen eines Probengefäßes (18) aus einem Probenträger (16) mittels einer Greifvorrichtung (12) mit einem ersten Greifabschnitt (30) und einem zweiten Greifabschnitt (32), wobei der erste Greifabschnitt (30) derart ausgebildet ist, dass er das Probengefäß (18) von einer ersten Seite her ergreift, wobei der erste Greifabschnitt (30) eine erste Halterung (34) für das Probengefäß (18) und ein erstes Werkzeug (42) zum Bewegen des Probengefäßes (18) entlang eines Hubwegs aufweist, wobei der zweite Greifabschnitt (32) derart ausgebildet ist, dass er das Probengefäß (18) von einer der ersten Seite gegenüber liegenden zweiten Seite her ergreift, wobei der zweite Greifabschnitt (32) eine zweite Halterung (52) für das Probengefäß (18) aufweist,
wobei die erste Seite eine Oberseite des Probengefäßes (18) ist und die zweite Seite eine Unterseite des Probengefäßes (18) ist wobei das Verfahren folgende Schritte umfasst:
- Positionieren des ersten Greifabschnitts (30) auf der ersten Seite des Probengefäßes (18) und des zweiten Greifabschnitts (32) auf der zweiten Seite des Probengefäßes (18) derart, dass der erste Greifabschnitt (30) dem zweiten Greifabschnitt (32) entlang des Hubwegs gegenüber liegt,
- In Eingriff Bringen des ersten Werkzeugs (42) mit dem Probengefäß (18),
- Bewegen des Probengefäßes (18) entlang des Hubwegs in Richtung von der ersten Seite zu der zweiten Seite,
- Aufnehmen des Probengefäßes (18) in der zweiten Halterung (52),
- Neu Positionieren des ersten Greifabschnitts (30) und des zweiten Greifabschnitts (32) in einer orthogonal zum Hubweg verlaufenden lateralen Richtung derart, dass der erste Greifabschnitt (30) auf der ersten Seite des Probengefäßes (18) dem zweiten Greifabschnitt (32) entlang des Hubwegs gegenüber liegt, wobei das Probengefäß (18) in einem nicht von dem Probenträger (16) eingenommenen freien Bereich angeordnet ist,
- Bewegen des Probengefäßes (18) entlang des Hubwegs in entgegengesetzter Richtung von der zweiten Seite zu der ersten Seite,
- In Eingriff Bringen des Probengefäßes (18) mit der im ersten Greifabschnitt (30) vorgesehenen ersten Halterung (34).

2. Verfahren nach Anspruch 1, wobei der zweite Greifabschnitt (32) ein zweites Werkzeug (48) aufweist, welches zum Bewegen des Probengefäßes (18) entlang des Hubwegs in der Richtung von der zweiten Seite zu der ersten Seite mit dem Probengefäß (18) in Eingriff bringbar ist.

3. Verfahren nach Anspruch 1 oder 2, ferner umfassend die folgenden Schritte zum Abgeben des Probengefäßes (18) in eine Zielprobengefäßaufnahme (16):
- Erneutes Neu Positionieren des ersten Greifabschnitts (30) derart, dass das Probengefäß (18) bezüglich des Hubwegs der Zielprobengefäßaufnahme zugeordnet ist,
- Außer Eingriff Bringen des Probengefäßes (18) von der im ersten Greifabschnitt (30) vorgesehenen ersten Halterung (34) und Bewegen des Probengefäßes (18) entlang des Hubwegs von der ersten Seite zu der zweiten Seite,
- Ablegen des Probengefäßes (18) in der Zielprobengefäßaufnahme.

4. Verfahren nach Anspruch 3, wobei das Außer Eingriff Bringen des Probengefäßes (18) von der im ersten Greifabschnitt (30) vorgesehenen ersten Halterung (34) mittels des im ersten Greifabschnitt (30) vorgesehenen ersten Werkzeugs (42) erfolgt.

5. Verfahren nach einem der Ansprüche 1 bis 4, wobei der erste Greifabschnitt (30) eine von der ersten Halterung (34) unabhängige Zentriereinrichtung (36) für das Probengefäß (18) aufweist, welche wenigstens ein Federelement umfasst, wobei im Zuge des In Eingriff-Bringens des Probengefäßes (18) mit der im ersten Greifabschnitt (30) vorgesehenen ersten Halterung (34) und/oder im Zuge des Außer Eingriff Bringens des Probengefäßes (34) von der im ersten Greifabschnitt (30) vorgesehenen ersten Halterung (34) ein Zentrieren des Probengefäßes (18) bezüglich des Hubwegs durch Spanneingriff mit der Zentriervorrichtung (36) erfolgt.

6. Verfahren nach Anspruch 5, wobei ein Spanneingriff des Probengefäßes (18) mit der Zentriereinrichtung (36) und Zentrieren des Probengefäßes (18) bezüglich des Hubwegs bei einer Aufnahmemanipulation jedenfalls vor dem in Eingriff Bringen und/oder bei einer Abgabemanipulation jedenfalls bei oder nach Freigabe des Eingriffs des Probengefäßes (18) mit der im ersten Greifabschnitt (30) vorgesehenen ersten Halterung (34) vorgesehen ist.

7. Verfahren nach Anspruch 5 oder 6, wobei das Federelement so ausgebildet ist, dass das Probengefäß (18) im Zuge seiner Bewegung in einer Eingriffsrichtung vom Probenträger (16) zu der ersten Halterung (34) in Spanneingriff mit der Zentriereinrichtung (36) gelangt, bevor es mit der ersten Halterung (34) in Eingriff gelangt, und/oder dass das Probengefäß (18) im Zuge seiner Bewegung entgegen der Eingriffsrichtung von der ersten Halterung (34) zum Probenträger (16) bei Freigabe des Eingriffs zwischen Probengefäß (18) und erster Halterung (34) in Spanneingriff mit der Zentriereinrichtung (36) ist.

8. Verfahren nach einem der Ansprüche 1 bis 7, wobei das im ersten Greifabschnitt (30) vorgesehene erste Werkzeug (42) so ausgebildet ist, dass es mit dem Probengefäß (18) zum Antrieb desselben in Richtung von der ersten Seite zu der zweiten Seite, nicht jedoch zum Antrieb in Richtung von der zweiten Seite zu der ersten Seite koppelbar ist.

9. Verfahren nach einem der Ansprüche 1 bis 8,wobei das im ersten Greifabschnitt (30) vorgesehene erste Werkzeug (42) bei Bewegung in Richtung von der ersten Seite zu der zweiten Seite mit dem Probengefäß (18) koppelbar ist, und bei Bewegung in Richtung von der zweiten Seite zu der ersten Seite von dem Probengefäß (18) entkoppelbar ist.

10. Verfahren nach einem der Ansprüche 1 bis 9, wobei das im ersten Greifabschnitt (30) vorgesehene erste Werkzeug (42) einen Stift oder Stempel (44) aufweist, der mit der ersten Seite des Probengefäßes (18) zusammenwirkt, um das Probengefäß (18) in Richtung von der ersten Seite zu der zweiten Seite zu bewegen; und/oder
wobei das im zweiten Greifabschnitt (32) vorgesehene zweite Werkzeug (48) so ausgebildet ist, dass es mit dem Probengefäß (18) zum Antrieb desselben in Richtung von der zweiten Seite zu der ersten Seite, nicht jedoch zum Antrieb desselben in Richtung von der ersten Seite zur zweiten Seite koppelbar ist.

11. Verfahren nach einem der Ansprüche 1 bis 10, wobei das im zweiten Greifabschnitt (32) vorgesehene zweite Werkzeug (48) bei Bewegung in Richtung von der zweiten Seite zu der ersten Seite mit dem Probengefäß (18) koppelbar ist, und bei Bewegung in Richtung von der ersten Seite zu der zweiten Seite von dem Probengefäß (18) entkoppelbar ist; und/oder wobei das im zweiten Greifabschnitt (32) vorgesehene zweite Werkzeug (48) einen Stift oder Stempel (50) aufweist, der in eine entsprechende Ausnehmung am Probengefäß (18) einführbar ist, um das Probengefäß (18) in Richtung von der zweiten Seite zu der ersten Seite anzutreiben.

12. Greifvorrichtung (12) zum Aufnehmen eines Probengefäßes (18), insbesondere eines mit einer Flüssigkeit gefüllten Probengefäßes, aus einem Probenträger (16), aufweisend:
- einen ersten Greifabschnitt (30), welcher derart ausgebildet ist, dass er das Probengefäß (18) von einer ersten Seite her ergreift, wobei der erste Greifabschnitt (30) eine erste Halterung (34) für das Probengefäß (18) und ein erstes Werkzeug (48) zum Bewegen des Probengefäßes (18) entlang eines Hubwegs aufweist, und
- einen zweiten Greifabschnitt (32), welcher derart ausgebildet ist, dass er das Probengefäß (18) von einer der ersten Seite gegenüber liegenden zweiten Seite her ergreift, wobei der zweite Greifabschnitt (32) eine zweite Halterung (52) für das Probengefäß (18) aufweist,
wobei die erste Seite eine Oberseite des Probengefäßes (18) ist und die zweite Seite eine Unterseite des Probengefäßes (18) ist,
wobei der Greifvorrichtung (12) eine Steuereinrichtung zugeordnet ist, die die Greifvorrichtung (12) zu Durchführung des Verfahrens gemäß einem der Ansprüche 1 bis 11 ansteuert.

13. Probenmanipulationsvorrichtung (10) zum automatisierten Manipulieren von Probengefäßen (18), insbesondere von mit einer Flüssigkeit gefüllten Probengefäßen (18), welche entlang vorgegebener Koordinaten relativ zu einem die Probengefäße (18) aufnehmenden Probenträger (16) bewegbar ist, wobei die Probenmanipulationseinrichtung (10) wenigstens eine Greifvorrichtung (12) nach Anspruch 12 aufweist.

14. Probenmanipulationsvorrichtung (10) nach Anspruch 13, welche entlang kartesischer Achsen relativ zu dem Probenträger (16) verfahrbar ist.

15. Speicherelement mit einem Speicherbereich, in dem ein Computerprogramm gespeichert ist, wobei das Computerprogramm dazu ausgebildet ist, das Verfahren gemäß einem der Ansprüche 1 bis 11 auszuführen, wenn es in einer Steuereinrichtung ausgeführt wird, die eine Greifvorrichtung (12) ansteuert, wobei die Greifvorrichtung (12) nach Anspruch 12 ausgeführt ist.

## Claims

1. Method of picking up a sample container (18) from a sample carrier (16) by means of a gripping device (12) having a first gripping portion (30) and a second gripping portion (32), wherein the first gripping portion (30) is configured in such a way that it grasps the sample container (18) from a first side, the first gripping portion (30) having a first holder (34) for the sample container (18) and a first tool (42) for moving the sample container (18) along a travel path, wherein the second gripping portion (32) is configured in such a way that it grasps the sample container (18) from a second side located opposite the first side, the second gripping portion (32) having a second holder (52) for the sample container (18), wherein the first side is an upper side of the sample container (18) and the second side is an underside of the sample container (18),
wherein the method comprises the following steps:
- positioning the first gripping portion (30) on the first side of the sample container (18) and positioning the second gripping portion (32) on the second side of the sample container (18) in such a way that the first gripping portion (30) is located opposite the second gripping portion (32) along the travel path,
- bringing the first tool (42) into engagement with the sample container (18),
- moving the sample container (18) along the travel path in the direction from the first side to the second side,
- picking up the sample container (18) in the second holder (52),
- re-positioning the first gripping portion (30) and the second gripping portion (32) in a lateral direction running orthogonally with respect to the travel path in such a way that the first gripping portion (30) on the first side of the sample container (18) is located opposite the second gripping portion (32) along the travel path, the sample container (18) being arranged in a free region not occupied by the sample carrier (16),
- moving the sample container (18) along the travel path in the opposite direction from the second side to the first side,
- bringing the sample container (18) into engagement with the first holder (34) provided in the first gripping portion (30).

2. Method according to claim 1, wherein the second gripping portion (32) has a second tool (48) which is arranged to be brought into engagement with the sample container (18) for the purpose of moving the sample container (18) along the travel path in the direction from the second side to the first side.

3. Method according to claim 1 or 2, further comprising the following steps for delivering the sample container (18) to a target sample container receptacle (16):
- re-positioning the first gripping portion (30) again in such a way that the sample container (18) is assigned to the target sample container receptacle with respect to the travel path,
- disengaging the sample container (18) from the first holder (34) provided in the first gripping portion (30) and moving the sample container (18) along the travel path from the first side to the second side,
- depositing the sample container (18) in the target sample container receptacle.

4. Method according to claim 3, wherein the disengagement of the sample container (18) from the first holder (34) provided in the first gripping portion (30) is effected by means of the first tool (42) provided in the first gripping portion (30).

5. Method according to any one of claims 1 to 4, wherein the first gripping portion (30) has a centring device (36) for the sample container (18), which centring device is independent of the first holder (34) and comprises at least one spring element, wherein in the course of the engagement of the sample container (18) with the first holder (34) provided in the first gripping portion (30) and/or in the course of the disengagement of the sample container (34) from the first holder (34) provided in the first gripping portion (30), the sample container (18) is centred with respect to the travel path by clamped engagement with the centring device (36).

6. Method according to claim 5, wherein clamped engagement of the sample container (18) with the centring device (36) and centring of the sample container (18) with respect to the travel path is provided, in the case of a pick-up manipulation, in any case prior to the engagement and/or, in the case of a delivery manipulation, in any case during or after release of the engagement of the sample container (18) with the first holder (34) provided in the first gripping portion (30).

7. Method according to claim 5 or 6, wherein the spring element is configured so that the sample container (18), in the course of its movement in an engagement direction from the sample carrier (16) to the first holder (34), enters into clamped engagement with the centring device (36) before it enters into engagement with the first holder (34), and/or the sample container (18), in the course of its movement in a direction opposite to the engagement direction from the first holder (34) to the sample carrier (16) on release of the engagement between sample container (18) and first holder (34), is in clamped engagement with the centring device (36).

8. Method according to any one of claims 1 to 7, wherein the first tool (42) provided in the first gripping portion (30) is configured so that it is couplable to the sample container (18) for driving thereof in the direction from the first side to the second side but not for driving in the direction from the second side to the first side.

9. Method according to any one of claims 1 to 8, wherein the first tool (42) provided in the first gripping portion (30) is couplable to the sample container (18) in the case of movement in the direction from the first side to the second side, and is decouplable from the sample container (18) in the case of movement in the direction from the second side to the first side.

10. Method according to any one of claims 1 to 9, wherein the first tool (42) provided in the first gripping portion (30) has a pin or punch (44) which co-operates with the first side of the sample container (18) in order to move the sample container (18) in the direction from the first side to the second side; and/or wherein the second tool (48) provided in the second gripping portion (32) is configured so that it is couplable to the sample container (18) for driving thereof in the direction from the second side to the first side but not for driving thereof in the direction from the first side to the second side.

11. Method according to any one of claims 1 to 10, wherein the second tool (48) provided in the second gripping portion (32) is couplable to the sample container (18) in the case of movement in the direction from the second side to the first side and is decouplable from the sample container (18) in the case of movement in the direction from the first side to the second side; and/or
wherein the second tool (38) provided in the second gripping portion (32) has a pin or punch which is insertable into a corresponding recess on the sample container (18) in order to drive the sample container (18) in the direction from the second side to the first side.

12. Gripping device (12) for picking up a sample container (18), especially a sample container filled with a fluid, from a sample carrier (16), having:
- a first gripping portion (30) which is configured in such a way that it grasps the sample container (18) from a first side, the first gripping portion (30) having a first holder (34) for the sample container (18) and a first tool (42) for moving the sample container (18) along a travel path, and
- a second gripping portion (32) which is configured in such a way that it grasps the sample container (18) from a second side located opposite the first side, the second gripping portion (32) having a second holder (52) for the sample container (18),
wherein the first side is an upper side of the sample container (18) and the second side is an underside of the sample container (18),
wherein the gripping device (12) is assigned a controller which actuates the gripping device (12) to perform the method according to any one of claims 1 to 11.

13. Sample manipulation device (10) for automated manipulation of sample containers (18), especially sample containers (18) filled with a fluid, which device is movable along pre-specified co-ordinates relative to a sample carrier (16) holding the sample containers (18), wherein the sample manipulation device (10) has at least one gripping device (12) according to claim 12.

14. Sample manipulation device (10) according to claim 13, which is movable relative to the sample carrier (16) along Cartesian axes.

15. Memory element having a memory region in which a computer program is stored, wherein the computer program is configured to perform the method according to any one of claims 1 to 11 when implemented in a controller which controls a gripping device (12), the gripping device (12) being configured according to claim 12.

## Revendications

1. Procédé permettant de recevoir un récipient pour échantillon (18) à partir d'un porte-échantillons (16) au moyen d'un dispositif de préhension (12) avec une première partie de préhension (30) et une deuxième partie de préhension (32), la première partie de préhension (30) étant réalisée de telle sorte qu'elle saisit le récipient pour échantillon (18) d'un premier côté, la première partie de préhension (30) présentant un premier support (34) destiné à accueillir le récipient pour échantillon (18) et un premier outil (42) permettant de déplacer le récipient pour échantillon (18) le long d'une course, la deuxième partie de préhension (32) étant réalisée de telle sorte qu'elle saisit le récipient pour échantillon (18) d'un deuxième côté opposé au premier côté, la deuxième partie de préhension (32) présentant un deuxième support (52) destiné à accueillir le récipient pour échantillon (18),
le premier côté étant un côté supérieur du récipient pour échantillon (18) et le deuxième côté étant un côté inférieur du récipient pour échantillon (18),
le procédé comprenant les étapes suivantes :
- positionnement de la première partie de préhension (30) du premier côté du récipient pour échantillon (18) et de la deuxième partie de préhension (32) du deuxième côté du récipient pour échantillon (18) de telle sorte que la première partie de préhension (30) se situe à l'opposé de la deuxième partie de préhension (32) le long de la course ;
- engagement du premier outil (42) sur le récipient pour échantillon (18) ;
- déplacement du récipient pour échantillon (18) le long de la course dans la direction du premier côté vers le deuxième côté ;
- réception du récipient pour échantillon (18) dans le deuxième support (52) ;
- repositionnement de la première partie de préhension (30) et de la deuxième partie de préhension (32) dans une direction latérale orthogonale à la course de telle sorte que la première partie de préhension (30) se situe du premier côté du récipient pour échantillon (18), à l'opposé de la deuxième partie de préhension (32) le long de la course, le récipient pour échantillon (18) étant disposé dans une zone libre non occupée par le porte-échantillons (16) ;
- déplacement du récipient pour échantillon (18) le long de la course dans la direction opposée du deuxième côté vers le premier côté ;
- engagement du récipient pour échantillon (18) sur le premier support (34) prévu dans la première partie de préhension (30).

2. Procédé selon la revendication 1, dans lequel la deuxième partie de préhension (32) présente un deuxième outil (48) qui peut être engagé sur le récipient pour échantillon (18) afin de déplacer le récipient pour échantillon (18) le long de la course dans la direction du deuxième côté vers le premier côté.

3. Procédé selon la revendication 1 ou 2, comprenant en outre les étapes suivantes permettant de déposer le récipient pour échantillon (18) dans un réceptacle cible (16) de récipients pour échantillon (18) :
- nouveau repositionnement de la première partie de préhension (30) de telle sorte que le récipient pour échantillon (18) est affecté au réceptacle cible de récipients pour échantillon (18) par rapport à la course ;
- désengagement du récipient pour échantillon (18) du premier support (34) prévu dans la première partie de préhension (30) et déplacement du récipient pour échantillon (18) le long de la course du premier côté vers le deuxième côté,
- dépôt du récipient pour échantillon (18) dans le réceptacle cible de récipients pour échantillon.

4. Procédé selon la revendication 3, dans lequel le désengagement du récipient pour échantillon (18) du premier support (34) prévu dans la première partie de préhension (30) se fait au moyen du premier outil (42) prévu dans la première partie de préhension (30).

5. Procédé selon l'une quelconque des revendications 1 à 4, dans lequel la première partie de préhension (30) présente un dispositif de centrage (36) indépendant du premier support (34) pour le récipient pour échantillon (18), qui comprend au moins un élément ressort où, lors de l'engagement du récipient pour échantillon (18) sur le premier support (34) prévu dans la première partie de préhension (30) et/ou lors du désengagement du récipient pour échantillon (18) du premier support (34) prévu dans la première partie de préhension (30), un centrage du récipient pour échantillon (18) par rapport à la course est effectué par une opération de serrage avec le dispositif de centrage (36).

6. Procédé selon la revendication 5, dans lequel une opération de serrage du récipient pour échantillon (18) avec le dispositif de centrage (36) et le centrage du récipient pour échantillon (18) par rapport à la course est prévu, lors d'une manipulation de réception, dans tous les cas avant l'engagement et/ou, lors d'une manipulation de libération, dans tous les cas pendant ou après le désengagement du récipient pour échantillon (18) du premier support prévu dans la première partie de préhension (30).

7. Procédé selon la revendication 5 ou 6, dans lequel l'élément ressort est réalisé de telle sorte que le récipient pour échantillon (18), lors de son déplacement dans une direction de préhension du porte-échantillons (16) vers le premier support (34) parvient à l'opération de serrage avec le dispositif de centrage (36) avant de s'engager dans le premier support (34), et/ou que le récipient pour échantillon (18), lors de son déplacement dans la direction de préhension inverse du premier support (34) vers le porte-échantillons (16), est serré par le dispositif de centrage (36), lors du désengagement entre le récipient pour échantillon (18) et le premier support (34).

8. Procédé selon l'une quelconque des revendications 1 à 7, dans lequel le premier outil (42) prévu dans la première partie de préhension (30) est réalisé de manière à pouvoir être couplé avec le récipient pour échantillon (18) pour l'entraînement de ce dernier dans la direction du premier côté vers le deuxième côté, mais pas pour son entraînement dans la direction du deuxième côté vers le premiers côté.

9. Procédé selon l'une quelconque des revendications 1 à 8, dans lequel le premier outil (42) prévu dans la première partie de préhension (30) peut être couplé avec le récipient pour échantillon (18) lors du déplacement de celui-ci dans la direction du premier côté vers le deuxième côté, et peut être découplé du récipient pour échantillon (18) lors du déplacement de ce dernier dans la direction du deuxième côté vers le premier côté.

10. Procédé selon l'une quelconque des revendications 1 à 9, dans lequel premier outil (42) prévu dans la première partie de préhension (30) présente une tige ou un tampon (44) qui interagit avec le premier côté du récipient pour échantillon (18) afin de déplacer le récipient pour échantillon (18) dans la direction du premier côté vers le deuxième côté ; et/ou
dans lequel le deuxième outil (48) prévu dans la deuxième partie de préhension (32) est réalisé de telle sorte qu'il peut être couplé avec le récipient pour échantillon (18) pour l'entraînement de ce dernier du deuxième côté vers le premier côté, mais pas pour son entraînement dans la direction du premier côté vers le deuxième côté.

11. Procédé selon l'une quelconque des revendications 1 à 10, dans lequel deuxième outil (48) prévu dans la deuxième partie de préhension (32) peut être couplé avec le récipient pour échantillon (18) lors du déplacement de ce dernier du deuxième côté vers le premier côté, et peut être découplé du récipient pour échantillon (18) lors du déplacement de ce dernier dans la direction du premier côté vers le deuxième côté ; et/ou
dans lequel le deuxième outil (48) prévu dans la deuxième partie de préhension (32) présente une tige ou un tampon (50) qui peut être introduit dans un évidement du récipient pour échantillon (18) prévu à cet effet, afin d'entraîner le récipient pour échantillon (18) dans la direction du deuxième côté vers le premier côté.

12. Dispositif de préhension (12) permettant de recevoir un récipient pour échantillon (18), en particulier un récipient pour échantillon rempli de liquide, à partir d'un porte-échantillons (16), présentant :
- une première partie de préhension (30) qui est réalisée de manière à saisir le récipient pour échantillon (18) par un premier côté, la première partie de préhension (30) présentant un premier support (34) permettant d'accueillir le récipient pour échantillon (18) et un premier outil (48) permettant de déplacer le récipient pour échantillon (18) le long d'une course, et
- une deuxième partie de préhension (32) qui est réalisée de manière à saisir le récipient pour échantillon (18) par un deuxième côté opposé au premier côté, la deuxième partie de préhension (32) présentant un deuxième support (52) destiné à accueillir le récipient pour échantillon (18),
le premier côté étant un côté supérieur du récipient pour échantillon (18) et le deuxième côté étant un côté inférieur du récipient pour échantillon (18),
le dispositif de préhension (12) étant affecté à un dispositif de commande qui commande le dispositif de préhension (12) pour la mise en œuvre du procédé selon l'une quelconque des revendications 1 à 11.

13. Dispositif de manipulation d'échantillon (10) pour la manipulation automatisée de récipients pour échantillon (18), en particulier de récipients pour échantillon (18) remplis de liquide, qui peut être déplacé le long de coordonnées prédéfinies par rapport à un porte-échantillons (16) recevant les récipients pour échantillon (18), le dispositif de manipulation d'échantillon (10) présentant au moins un dispositif de préhension (12) selon la revendication 12.

14. Dispositif de manipulation d'échantillon (10) selon la revendication 13, déplaçable le long d'axes cartésiens par rapport au porte-échantillons (16).

15. Élément de stockage avec zone de stockage dans lequel un programme d'ordinateur est enregistré, ce programme d'ordinateur étant réalisé de manière à exécuter le procédé selon l'une quelconque des revendications 1 à 11, s'il est exécuté dans un dispositif de commande qui commande un dispositif de préhension (12), ce dispositif de préhension (12) étant réalisé selon la revendication 12.
